(19) Europäisches Patentamt
European Patent Office
Office européen des brevets

(11) **EP 2 442 569 A1**

(12) **EUROPEAN PATENT APPLICATION**
published in accordance with Art. 153(4) EPC

(43) Date of publication:
**18.04.2012 Bulletin 2012/16**

(51) Int Cl.:
***H04N 7/32*** *(2006.01)*

(21) Application number: **10786114.8**

(86) International application number:
**PCT/JP2010/059478**

(22) Date of filing: **03.06.2010**

(87) International publication number:
**WO 2010/143583 (16.12.2010 Gazette 2010/50)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **09.06.2009 JP 2009138517**

(71) Applicant: **Sony Corporation
Tokyo 108-0075 (JP)**

(72) Inventor: **SATO, Kazushi
Tokyo 108-0075 (JP)**

(74) Representative: **Horner, David Richard
D Young & Co LLP
120 Holborn
London EC1N 2DY (GB)**

(54) **IMAGE PROCESSING DEVICE AND METHOD**

(57)     The present invention relates to an image processing apparatus and method configured to be able to suppress increases in computation due to interpolation processing.

For pixels of fractional pixel precision corresponding to sampling positions at a position b and a position d, pixel values corresponding to sampling positions at the position b and the position d are obtained by performing a sum-of-products operation using a first filter. For fractional pixel precision corresponding to sampling positions at a position c, pixel values corresponding to sampling positions at the position c are obtained by performing a sum-of-products operation using a second filter and an intermediate value B or an intermediate value D generated using a second filter with fewer taps than the first filter. The present invention may be applied to image coding apparatus that code in the H.264/AVC format, for example.

FIG. 1

**Description**

Technical Field

The present invention relates to an image processing apparatus and method, and more particularly, to an image processing apparatus and method configured to suppress increases in computation due to interpolation processing.

Background Art

Recently, there has been a proliferation of apparatus that digitally handle image information, and when so doing, compress images for the purpose of efficient information transfer and storage. Such apparatus compress images by implementing coding formats that utilize redundancies characteristic of image information and compress information by means of an orthogonal transform such as the discrete cosine transform and by motion compensation. Such coding formats include MPEG (Moving Picture Experts Group), for example.

Particularly, MPEG-2 (ISO/IEC 13818-2) is defined as a general-purpose image coding format, and is a standard encompassing both interlaced scan images and progressive scan images, as well as standard-definition images and high-definition images. For example, at present MPEG-2 is broadly used in a wide range of professional and consumer applications. By using the MPEG-2 compression format, a bit rate from 4 to 8 Mbps is allocated if given a standard-definition interlaced image having 720x480 pixels, for example. Also, by using the MPEG-2 compression format, a bit rate from 18 to 22 Mbps is allocated if given a high-definition interlaced image having 1920x1088 pixels, for example. In so doing, it is possible to realize a high compression rate and favorable image quality.

Although MPEG-2 has primarily targeted high image quality coding adapted for broadcasting, it is not compatible with coding formats having a bit rate lower than that of MPEG-1, or in other words a high compression rate. Due to the proliferation of mobile devices, it is thought that the need for such coding formats will increase in the future, and in response the MPEG-4 coding format has been standardized. MPEG-4 was designated an international standard for image coding in December 1998 as ISO/IEC 14496-2.

Furthermore, standardization of H.26L (ITU-T Q6/16 VCEG), which was initially for the purpose of image coding for videoconferencing, has been progressing recently. Compared to previous coding formats such as MPEG-2 and MPEG-4, H.26L is known to place more computational demands for coding and decoding, but higher encoding efficiency is realized. Also, as a link to MPEG-4 activity, standardization based on this H.26L that introduces functions which are not supported in H.26L and realizes higher encoding efficiency is being currently conducted as the Joint Model of Enhanced-Compression Video Coding. As part of the standardization schedule, H.264 and MPEG-4 Part 10 (Advanced Video Coding, hereinafter abbreviated H.264/AVC) was internationally standardized in March 2003.

Additionally, as an extension of the above, standardization of the FRExt (Fidelity Range Extension) was completed in February 2005. FRExt includes coding tools required for business use, such as RGB, 4:2:2, and 4:4:4, as well as the 8×8 DCT and quantization matrices defined in MPEG-2. In so doing, H.264/AVC can be used for image coding able to favorably express even the film noise included in movies, which has led to its use in a wide range of applications such as Blu-Ray Discs (trademark).

However, needs are growing for coding at even higher compression rates, such as for compressing images having approximately 4000x2000 pixels, four times that of a high-definition image, or for delivering high-definition images in an environment of limited transmission capacity such as the Internet. For this reason, ongoing investigation regarding improved encoding efficiency is being conducted by the VCEG (Video Coding Experts Group) under the jurisdiction of the ITU-T discussed earlier.

Herein, with the motion prediction/compensation of the H.264/AVC format, prediction efficiency is improved by conducting a prediction/compensation process at quarter pixel precision.

For example, with the MPEG-2 format, a motion prediction/compensation process is conducted at half pixel precision using linear interpolation. In contrast, with the H.264/AVC format, a prediction/compensation process at quarter pixel precision is conducted using a 6-tap FIR (Finite Impulse Response) filter.

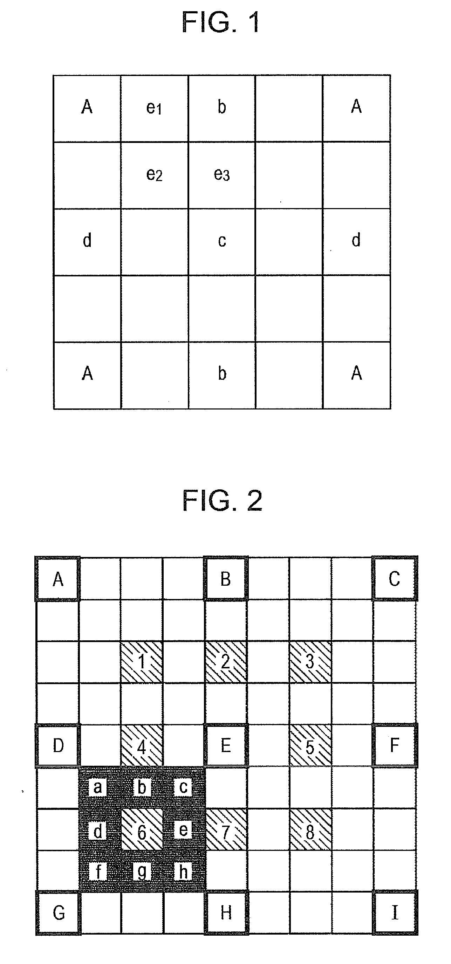

Fig. 1 is a diagram explaining a prediction/compensation process at quarter pixel precision in the H.264/AVC format. With the H.264/AVC format, a prediction/compensation process at quarter pixel precision is conducted using a 6-tap FIR (Finite Impulse Response) filter.

In the example in Fig. 1, the positions A represent integer precision pixel positions, the positions b, c, and d represent half pixel precision positions, and the positions e1, e2, and e3 represent quarter pixel precision positions. First, in the following, Clip() is defined as in the following Eq. (1).

[Expression 1]

$$Clip1(a) = \begin{cases} 0; \text{if}(a<0) \\ a; \text{otherwise} \\ max\_pix; \text{if}(a>max\_pix) \end{cases} \quad \cdots (1)$$

Herein, the value of max_pix becomes 255 in the case where an input image has 8-bit precision.

Pixel values at the positions b and d are generated using a 6-tap FIR filter as in the following Eq. (2).

[Expression 2]

$$F = A_{-2} - 5 \cdot A_{-1} + 20 \cdot A_0 + 20 \cdot A_1 - 5 \cdot A_2 + A_3$$

$$b, d = Clip1((F+16) >> 5) \quad (2)$$

A pixel value at the position c is generated by applying a 6-tap FIR filter in the horizontal direction and the vertical direction as in the following Eq. (3).

[Expression 3]

$$F = b_{-2} - 5 \cdot b_{-1} + 20 \cdot b_0 + 20 \cdot b_1 - 5 \cdot b_2 + b_3$$

or

$$F = d_{-2} - 5 \cdot d_{-1} + 20 \cdot d_0 + 20 \cdot d_1 - 5 \cdot d_2 + d_3$$

$$c = Clip1((F+512) >> 10) \quad (3)$$

Herein, both of the sum-of-products processes in the horizontal direction and the vertical direction are conducted, and then lastly the Clip process is executed only once.

The positions e1 to e3 are generated by linear interpolation as in the following Eq. (4).

[Expression 4]

$$e_1 = (A+b+1) >> 1$$

$$e_2 = (b+d+1) >> 1$$

$$e_3 = (b+c+1) >> 1 \quad (4)$$

The kind of process by which such motion vectors computed at quarter pixel precision are selected is also important for obtaining a compressed image with high encoding efficiency. The method implemented in the reference software called the JM (Joint Model) disclosed in NPL 1 may be cited as an example of such a process.

Next, the motion estimation method implemented in the JM will be described with reference to Fig. 2.

In the example in Fig. 2, pixels A to I represent pixels having pixel values with integer pixel precision (hereinafter referred to as pixels of integer pixel precision). Pixels 1 to 8 represent pixels having pixel values with half pixel precision near the pixel E (hereinafter referred to as pixels of half pixel precision). Pixels a to h represent pixels having pixel values with quarter pixel precision surrounding the pixel 6 (hereinafter referred to as pixels of quarter pixel precision).

In the JM, a first step involves computing a motion vector of integer pixel precision for which a cost function value such as the SAD (Sum of Absolute Differences) is minimized within a given search range. Assume that as a result the pixel corresponding to the computed motion vector is the pixel E.

Next, a second step involves computing a pixel from among the pixel E and the pixels 1 to 8 of half pixel precision near the pixel E for whose pixel value the above-described cost function value is minimized. This pixel (in the case of the example in Fig. 2, the pixel 6) is taken to be the pixel corresponding to the optimal motion vector of half pixel precision.

Then, a third step involves computing a pixel from among the pixel 6 and the pixels a to h of quarter pixel precision near the pixel 6 for whose pixel value the above-described cost function value is minimized. In so doing, the motion vector corresponding to the computed pixel becomes the optimal motion vector of quarter pixel precision.

As above, a prediction/compensation process at quarter pixel precision is conducted in H.264/AVC, but multiple technologies for further improving encoding efficiency for this prediction/compensation process quarter pixel precision have been proposed.

For example, with H.264/AVC, the filter coefficients for generating pixel values at sampling positions corresponding to a fractional pixel precision motion vector described above with reference to Fig. 1 are predetermined, as described in NPL 2.

Accordingly, in NPL 3 it is proposed that the filter coefficients be adaptively switched for each target frame so as to minimize prediction residual error.

In other words, in NPL 3, first, a first step involves conducting the ordinary motion estimation process of the H.264/AVC format and computing motion vector values for respective motion compensation blocks.

A second step involves optimizing the filter for the motion vector values computed in the first step so as to minimize motion residual error.

Then, a third step involves using the filter coefficients computed in the second step and conducting motion estimation again to update the motion vector values. In so doing, encoding efficiency can be improved.

By additionally repeating the above steps, the filter coefficients and the motion vector values can be optimized.

Also, in NPL 4, motion prediction at 1/8 pixel precision is proposed with respect to the prediction/compensation process at quarter pixel precision in the H.264/AVC format.

In other words, in NPL 4, an interpolation process at half pixel precision is conducted with the filter [-3,12,-39,158,158,-39,12,-3]/256. Also, an interpolation process at quarter pixel precision is conducted with the filter [-3,12,-37,229,71,-21,6,-1]/256, and an interpolation process at 1/8 pixel precision is conducted with linear interpolation.

By conducting motion prediction using interpolation at higher pixel precision in this way, prediction accuracy can be improved and an improvement in encoding efficiency can be realized, particularly for comparatively slow motion sequences having high-resolution textures.

Herein, Figs. 1 and 2 discussed above will also be used hereinafter as drawings explaining the present invention.

Citation List

Non-Patent Literature

NPL 1: H.264/AVC Software Coordination, Institut Nachrichtentechnik Heinrich-Hertz-Institut, (accessed May 24, 2009), Internet <URL:

http://iphome.hhi.de/suehring/tml/index.htm>

NPL 2: "8.4.2.2.1 Luma sample interpolation process", "ITU-T Recommendation H.264 Advanced video coding for generic audiovisual", P162-P164 November 2007
NPL 3: "Motion compensated prediction with 1/8-pel displacement vector resolution", VCEG-AD09, ITU-Telecommunications Standardization Sector STUDY GROUP Question 6 Video Coding Experts Group (VCEG), 23-27 Oct 2006
NPL 4: "Prediction of P- and B- Frames Using a Two-dimensional Non-separable Adaptive Wiener Interpolation for H.264/AVC", VCEG-AD08, ITU-Telecommunications Standardization Sector STUDY GROUP Question 6 Video Coding Experts Group (VCEG), 23-27 Oct 2006

Summary of Invention

Technical Problem

As discussed above, multiple technologies for further improving encoding efficiency for the prediction/compensation process at quarter pixel precision in the H.264/AVC format have been proposed, but a huge computational load is imposed in blocks where such motion prediction and compensation are conducted.

Particularly, in Fig. 1, pixel values for the positions b and d are obtained by applying a 6-tap FIR filter to pixel values of integer pixel precision. In contrast, obtaining a pixel value for the position c involves applying respective 6-tap filters in the horizontal direction and the vertical direction, or in other words a 36-tap filter, and this process is largely responsible for the increase in computation.

Furthermore, obtaining a pixel value for the position e3 involves generating a value by linear interpolation using the pixel value for the position c which as generated by a computationally expensive process as described above, and this process is also responsible for further increases in computation.

The present invention, being devised in light of such circumstances, suppresses increases in computation due to interpolation.

Solution to Problem

An image processing apparatus of a first aspect of the present invention is provided with motion estimating means for computing a motion vector for a target block to be encoded, filter setting means for setting filter coefficients with different numbers of taps depending on a sampling position of fractional pixel precision corresponding to the motion vector computed by the motion estimating means, and interpolating means for generating a pixel value for the sampling position using the filter coefficients set by the filter setting means.

The filter setting means may respectively set the filter coefficients with different numbers of taps for a first sampling position that is of fractional pixel precision in either the horizontal direction or the vertical direction and of integer pixel precision in the other direction, versus a second sampling position that is of fractional pixel precision in both directions.

The filter setting means may set the filter coefficients with fewer taps for the second sampling position compared to the first sampling position.

The filter setting means may set {1,-5,20,20,-5,1} predefined by a coding standard as the filter coefficients for the first sampling position.

The filter setting means may set {-1,5,5-1} as the filter coefficients for the second sampling position.

The interpolating means may generate a pixel value for a sampling position at half pixel precision using the filter coefficients set by the filter setting means, and generate a pixel value for a sampling position at quarter pixel precision by conducting linear interpolation using at least one of a pixel value of integer pixel precision and the generated pixel value for the sampling position at half pixel precision.

The interpolating means may generate a pixel value for a sampling position at half pixel precision and a pixel value for a sampling position at quarter pixel precision using the filter coefficients set by the filter setting means, and generate a pixel for a sampling position at 1/8 pixel precision by conducting linear interpolation using at least one of a pixel value of integer pixel precision, the generated pixel value for the sampling position at half pixel precision, and the generated pixel value for the sampling position at quarter pixel precision.

Values predefined by a coding standard may be used as the filter coefficients.

Optimal values computed for each frame are used as the filter coefficients.

In the case where the motion prediction/compensation block size used to compute the motion vector is a block size belonging to a first type, the filter setting means may always set first filter coefficients, and in the case where the motion prediction/compensation block size used to compute the motion vector is a block size belonging to a second type, the filter setting means may set the first filter coefficients for a first sampling position that is of fractional pixel precision in either the horizontal direction or the vertical direction and of integer pixel precision in the other direction, while also setting second filter coefficients with fewer taps compared to the first sampling position for a second sampling position that is of fractional pixel precision in both directions.

An image processing method of a first aspect of the present invention includes steps wherein an image processing apparatus computes a motion vector for a target block to be encoded, sets filter coefficients with different numbers of taps depending on a sampling position of fractional pixel precision corresponding to the motion vector computed by the motion estimating means, and generates a pixel value for the sampling position using the set filter coefficients.

An image processing apparatus of a second aspect of the present invention is provided with decoding means for decoding motion vector information for a target block to be decoded, filter setting means for setting filter coefficients with different numbers of taps depending on a sampling position of fractional pixel precision corresponding to the motion vector information for the target block that was decoded by the decoding means, and interpolating means for generating a pixel value for the sampling position using the filter coefficients set by the filter setting means.

The filter setting means may respectively set the filter coefficients with different numbers of taps for a first sampling position that is of fractional pixel precision in either the horizontal direction or the vertical direction and of integer pixel precision in the other direction, versus a second sampling position that is of fractional pixel precision in both directions.

The filter setting means may set the filter coefficients with fewer taps for the second sampling position compared to the first sampling position.

The filter setting means may set {1,-5,20,20,-5,1} predefined by a coding standard as the filter coefficients for the first sampling position.

The filter setting means may set {-1,5,5-1} as the filter coefficients for the second sampling position.

The interpolating means may generate a pixel value for a sampling position at half pixel precision using the filter coefficients set by the filter setting means, and generate a pixel value for a sampling position at quarter pixel precision by conducting linear interpolation using at least one of a pixel value of integer pixel precision and the generated pixel value for the sampling position at half pixel precision.

The interpolating means may generate a pixel value for a sampling position at half pixel precision and a pixel value for a sampling position at quarter pixel precision using the filter coefficients set by the filter setting means, and generate a pixel for a sampling position at 1/8 pixel precision by conducting linear interpolation using at least one of a pixel value of integer pixel precision, the generated pixel value for the sampling position at half pixel precision, and the generated pixel value for the sampling position at quarter pixel precision.

Values predefined by a coding standard may be used as the filter coefficients.

Optimal values computed for each frame may be used as the filter coefficients.

The filter setting means may specify a motion prediction/compensation block size to be used to compute the motion vector on the basis of the motion vector information, and in the case where the block size belongs to a first type, the filter setting means may always set first filter coefficients, while in the case where the block size belongs to a second type, the filter setting means may set the first filter coefficients for a first sampling position that is of fractional pixel precision in either the horizontal direction or the vertical direction and of integer pixel precision in the other direction, while also setting second filter coefficients with fewer taps compared to the first sampling position for a second sampling position that is of fractional pixel precision in both directions.

An image processing method of a second aspect of the present invention includes steps wherein an image processing apparatus decodes motion vector information for a target block to be decoded, sets filter coefficients with different numbers of taps depending on a sampling position of fractional pixel precision corresponding to the decoded motion vector information for the target block, and generates a pixel value for the sampling position using the set filter coefficients.

In a first aspect of the present invention, a motion vector for a target block to be encoded is computed, filter coefficients with different numbers of taps are set depending on a sampling position of fractional pixel precision corresponding to the computed motion vector, and a pixel value for the sampling position is generated using the set filter coefficients.

In a second aspect of the present invention, motion vector information for a target block to be decoded is decoded, filter coefficients with different numbers of taps are set depending on a sampling position of fractional pixel precision corresponding to the decoded motion vector information for the target block, and a pixel value for the sampling position is generated using the set filter coefficients.

However, the respective image processing apparatus discussed above may be independent apparatus, and may also be internal blocks constituting a single image encoding apparatus or image decoding apparatus.

Advantageous Effects of Invention

According to a first aspect of the present invention, pixel values of fractional pixel precision can be generated. Also, according to a first aspect of the present invention, increases in computation due to interpolation can be suppressed.

According to a second aspect of the present invention, pixel values of fractional pixel precision can be generated. Also, according to a second aspect of the present invention, increases in computation due to interpolation can be suppressed.

Brief Description of Drawings

[Fig. 1] Fig. 1 is a diagram explaining a motion prediction/compensation process at quarter pixel precision in the H. 264/AVC format.
[Fig. 2] Fig. 2 is a diagram explaining a motion estimation method in the H.264/AVC format.

[Fig. 3] Fig. 3 is a block diagram illustrating a configuration of an embodiment of an image encoding apparatus to which the present invention has been applied.

[Fig. 4] Fig. 4 is a diagram explaining a variable block size motion prediction/compensation process.

[Fig. 5] Fig. 5 is a diagram explaining a multi-reference frame motion prediction/compensation process.

[Fig. 6] Fig. 6 is a diagram explaining an exemplary motion vector information generation process.

[Fig. 7] Fig. 7 is a block diagram illustrating an exemplary configuration of the motion prediction/compensation unit and the interpolation filter switcher in Fig. 3.

[Fig. 8] Fig. 8 is a flowchart explaining an encoding process of the image encoding apparatus in Fig. 3.

[Fig. 9] Fig. 9 is a flowchart explaining the prediction process in step S21 of Fig. 8.

[Fig. 10] Fig. 10 is a flowchart explaining the intra prediction process in step S31 of Fig. 9.

[Fig. 11] Fig. 11 is a flowchart explaining the inter motion prediction process in step S32 of Fig. 9.

[Fig. 12] Fig. 12 is a flowchart explaining the sampling position-dependent interpolation process in step S53 of Fig. 11.

[Fig. 13] Fig. 13 is a block diagram illustrating a configuration of an embodiment of an image decoding apparatus to which the present invention has been applied.

[Fig. 14] Fig. 14 is a block diagram illustrating an exemplary configuration of the motion prediction/compensation unit and the interpolation filter switcher in Fig. 13.

[Fig. 15] Fig. 15 is a flowchart explaining a decoding process of the image decoding apparatus in Fig. 13.

[Fig. 16] Fig. 16 is a flowchart explaining the prediction process in step S138 of Fig. 15.

[Fig. 17] Fig. 17 is a flowchart explaining the motion vector information-dependent interpolation process in step S175 of Fig. 16.

[Fig. 18] Fig. 18 is a diagram explaining another exemplary variable block size motion prediction/compensation process.

[Fig. 19] Fig. 19 is a diagram explaining another exemplary variable block size motion prediction/compensation process.

[Fig. 20] Fig. 20 is a flowchart explaining another exemplary inter motion prediction process.

[Fig. 21] Fig. 21 is a flowchart explaining the first motion prediction process in step S222 of Fig. 20.

[Fig. 22] Fig. 22 is a flowchart explaining the second motion prediction process in step S223 of Fig. 20.

[Fig. 23] Fig. 23 is a flowchart explaining another exemplary motion vector information-dependent interpolation process.

[Fig. 24] Fig. 24 is a flowchart explaining the first interpolation process in step S302 of Fig. 23.

[Fig. 25] Fig. 25 is a flowchart explaining the second interpolation process in step S303 of Fig. 23.

[Fig. 26] Fig. 26 is a block diagram illustrating an exemplary hardware configuration of a computer.

Description of Embodiments

Hereinafter, embodiments of the present invention will be described with reference to the drawings.

[Exemplary configuration of image encoding apparatus]

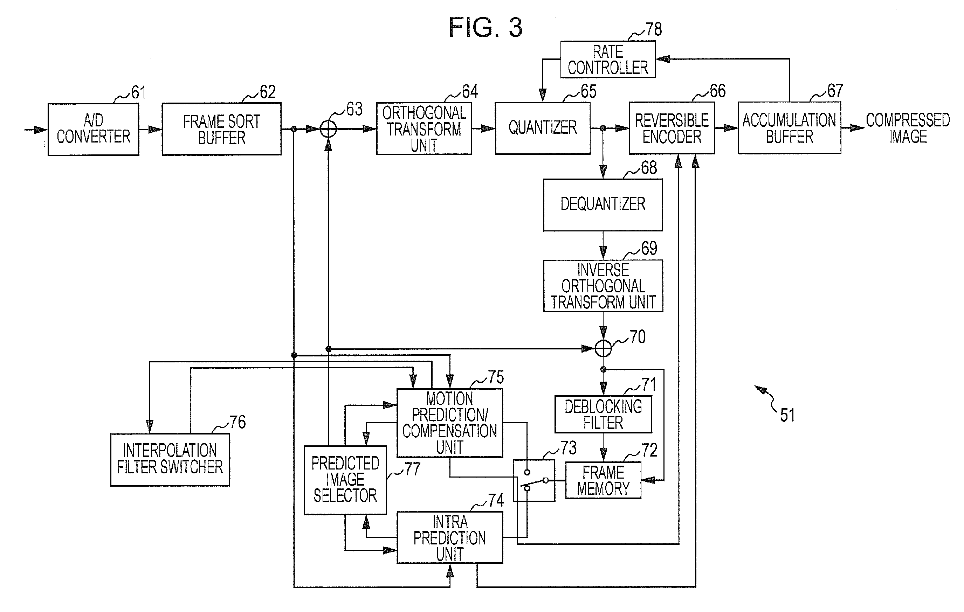

Fig. 3 illustrates a configuration of an embodiment of an image encoding apparatus as an image processing apparatus to which the present invention has been applied.

The image encoding apparatus 51 compresses images in the H.264 and MPEG-4 Part 10 (Advanced Video Coding) (hereinafter abbreviated H.264/AVC) format, for example.

In the example in Fig. 1, the image encoding apparatus 51 comprises an A/D converter 61, a frame sort buffer 62, an arithmetic unit 63, an orthogonal transform unit 64, a quantizer 65, a reversible encoder 66, an accumulation buffer 67, a reverse quantization unit 68, an inverse orthogonal transform unit 69, an arithmetic unit 70, a deblocking filter 71, frame memory 72, a switch 73, an intra prediction unit 74, a motion prediction/compensation unit 75, an interpolation filter switcher 76, a predicted image selector 77, and a rate controller 78.

The A/D converter 61 A/D converts an input image and outputs it to the frame sort buffer 62 for storage. The frame sort buffer 62 takes stored images of frames in display order and sorts them in a frame order for encoding according to a GOP (Group of Pictures).

The arithmetic unit 63 subtracts a predicted image from the intra prediction unit 74 selected by the predicted image selector 77 or a predicted image from the motion prediction/compensation unit 75 from an image read out from the frame sort buffer 62, and outputs the difference information to the orthogonal transform unit 64. The orthogonal transform unit 64 applies an orthogonal transform such as the discrete cosine transform or the Karhunen-Loeve transform to the difference information from the arithmetic unit 63, and outputs the transform coefficients. The quantizer 65 quantizes the transform coefficients output by the orthogonal transform unit 64.

The quantized transform coefficients output from the quantizer 65 are input into the reversible encoder 66. At this point, reversible coding such as variable-length coding and arithmetic coding are performed, and the quantized transform coefficients are compressed.

The reversible encoder 66 acquires information indicating intra prediction from the intra prediction unit 74, and acquires information indicating an inter prediction mode, etc. from the motion prediction/compensation unit 75. Herein, information indicating intra prediction and information indicating inter prediction will be hereinafter also referred to as intra prediction mode information and inter prediction mode information, respectively.

In addition to encoding the quantized transform coefficients, the reversible encoder 66 encodes information indicating intra prediction and information indicating an inter prediction mode, etc., which is taken to be part of the header information in a compressed image. The reversible encoder 66 supplies encoded data to the accumulation buffer 67 for storage.

For example, in the reversible encoder 66, a reversible encoding process such as variable-length coding or arithmetic coding is conducted. CAVLC (Context-Adaptive Variable Length Coding) defined in the H.264/AVC format may be cited as the variable-length coding. CABAC (Context-Adaptive Binary Arithmetic Coding) may be cited as the arithmetic coding.

The accumulation buffer 67 takes data supplied from the reversible encoder 66 and outputs it to, for example, a subsequent recording apparatus, transmission path, etc. not illustrated as a compressed image encoded by the H. 264/AVC format.

Also, the quantized transform coefficients output by the quantizer 65 are also input into the reverse quantization unit 68, and after being reverse quantized, are also subjected to an inverse orthogonal transform at the inverse orthogonal transform unit 69. The inverse orthogonally transformed output is added to a predicted image supplied from the predicted image selector 77 by the arithmetic unit 70 and becomes a locally decoded image. The deblocking filter 71 supplies the decoded image to the frame memory 72 for storage after removing blocking artifacts therefrom. The image from before the deblocking process was performed by the deblocking filter 71 is also supplied to and stored in the frame memory 72.

The switch 73 outputs a reference image stored in the frame memory 72 to the motion prediction/compensation unit 75 or the intra prediction unit 74.

In this image encoding apparatus 51, I-pictures, B-pictures, and P-pictures from the frame sort buffer 62 are supplied to the intra prediction unit 74 as images for intra prediction (also called intra processing), for example. Also, B-pictures and P-pictures read out from the frame sort buffer 62 are supplied to the motion prediction/compensation unit 75 as images for inter prediction (also called inter processing).

The intra prediction unit 74 conducts an intra prediction process in all intra prediction modes given as candidates, and generates predicted images on the basis of an image to intra predict which is read out from the frame sort buffer 62 and a reference image supplied from the frame memory 72.

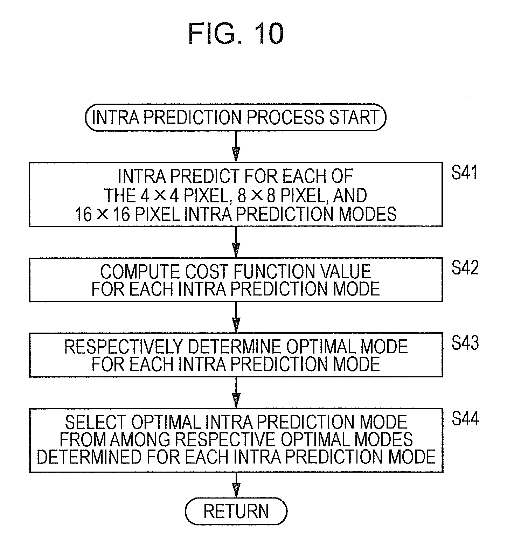

At this point, the intra prediction unit 74 computes a cost function value for all intra prediction modes given as candidates, and selects the intra prediction mode whose computed cost function value gives the minimum value as the optimal intra prediction mode. Details regarding this cost function value will be discussed later with reference to Fig. 10.

The intra prediction unit 74 supplies the predicted image generated with the optimal intra prediction mode and its cost function value to the predicted image selector 77. In the case where the predicted image generated with the optimal intra prediction mode is selected by the predicted image selector 77, the intra prediction unit 74 supplies information indicating the optimal intra prediction mode to the reversible encoder 66. The reversible encoder 66 encodes this information, which is taken to be part of the header information in a compressed image.

The motion prediction/compensation unit 75 conducts a motion prediction/compensation process in all inter prediction modes given as candidates. In other words, the motion prediction/compensation unit 75 is supplied with an image to be inter processed which is read out from the frame sort buffer 62, and a reference image from the frame memory 72 via the switch 73. On the basis of the image to be inter processed and the reference image, the motion prediction/compensation unit 75 detects motion vectors at integer pixel precision in all inter prediction modes given as candidates. The motion prediction/compensation unit 75 supplies the interpolation filter switcher 76 with coordinate information for pixels of fractional pixel precision near the pixels of integer pixel precision corresponding to the detected motion vectors.

The motion prediction/compensation unit 75 conducts an interpolation process using a filter indicated by filter selection information from the interpolation filter switcher 76, and generates pixel values for sampling positions of fractional pixel precision near the pixels corresponding to the detected motion vectors. The motion prediction/compensation unit 75 uses the generated pixel values to compute motion vectors of fractional pixel precision in all inter prediction modes and performs a compensation process on the reference image on the basis of the motion vectors of fractional pixel precision to generate predicted images.

Also, the motion prediction/compensation unit 75 computes cost function values for all inter prediction modes given as candidates. The motion prediction/compensation unit 75 determines the optimal inter prediction mode to be the prediction mode for which the minimum value is given from among the computed cost function values.

The motion prediction/compensation unit 75 supplies the predicted image generated with the optimal inter prediction mode and its cost function value to the predicted image selector 77. In the case where the predicted image generated with the optimal inter prediction mode is selected by the predicted image selector 77, the motion prediction/compensation unit 75 supplies information indicating the optimal inter prediction mode (inter prediction mode information) to the reversible encoder 66.

At this point, motion vector information and reference frame information, etc. is also output to the reversible encoder 66. The reversible encoder 66 likewise performs a reversible encoding process such as variable-length coding or arithmetic coding on the information from the motion prediction/compensation unit 75 and inserts it into the compressed image header.

The interpolation filter switcher 76 is supplied with coordinate information for pixels of fractional pixel precision near the pixels of integer pixel precision corresponding to the motion vectors detected by the motion prediction/compensation unit 75. The interpolation filter switcher 76 sets a filter to be used for interpolation according to the sampling positions corresponding to the coordinates indicated by the information from the motion prediction/compensation unit 75, and supplies the motion prediction/compensation unit 75 with filter selection information indicating which filter has been set.

Herein, the sampling positions refer to any of the positions b, c, d given as positions of half pixel precision and the positions e1, e2, e3 given as positions of quarter pixel precision which were discussed earlier with reference to Fig. 1, for example.

The predicted image selector 77 determines the optimal prediction mode from between the optimal intra prediction mode and the optimal inter prediction mode, on the basis of the respective cost function values output by the intra prediction unit 74 and the motion prediction/compensation unit 75. Then, the predicted image selector 77 selects the predicted image of the optimal prediction mode thus determined, and supplies it to the arithmetic units 63 and 70. At this point, the predicted image selector 77 supplies predicted image selection information to the intra prediction unit 74 or the motion prediction/compensation unit 75.

The rate controller 78 controls the rate of quantization operations by the quantizer 65 such that overflow or underflow does not occur, on the basis of compressed images stored in the accumulation buffer 67.

[Description of H.264/AVC]

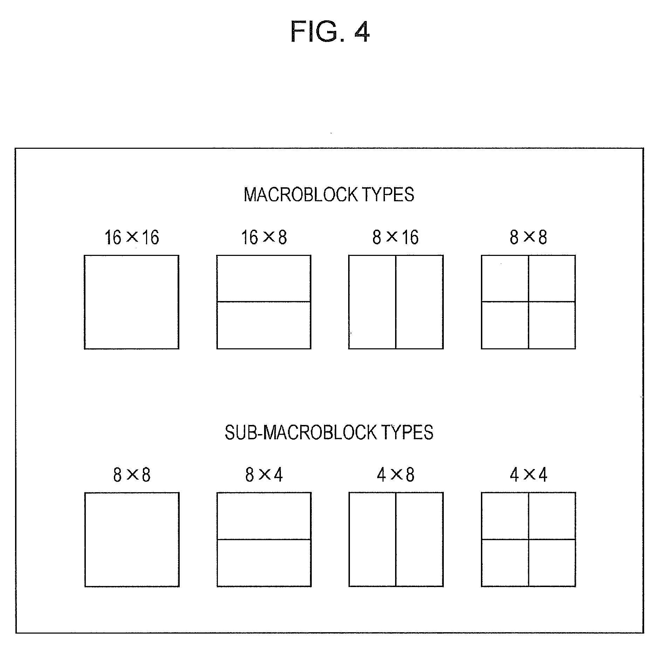

Fig. 4 is a diagram illustrating exemplary block sizes for motion prediction/compensation in the H.264/AVC format. In the H.264/AVC format, motion prediction/compensation is conducted while making the block size variable.

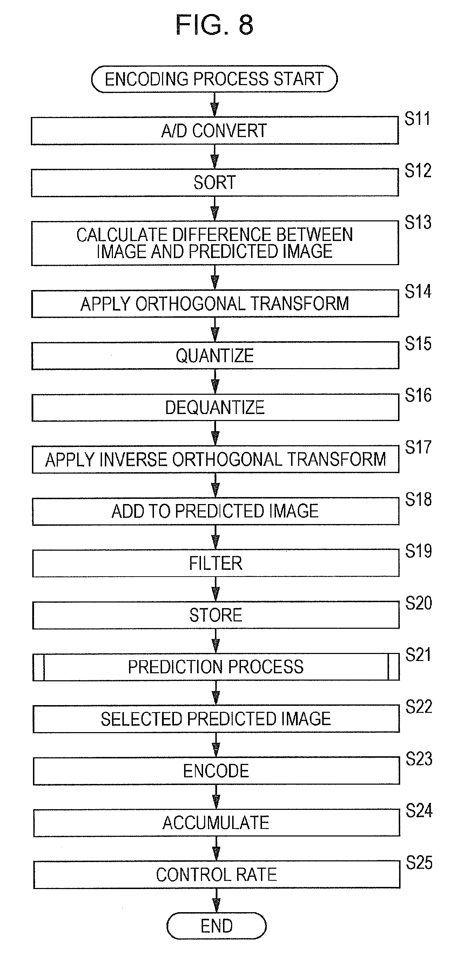

On the top row in Fig. 4, macroblocks composed of 16×16 pixels and divided into 16×16 pixel, 16×8 pixel, 8×16 pixel, and 8×8 pixel partitions are illustrated in order from the left. Also, on the bottom row in Fig. 4, 8×8 pixel partitions divided into 8×8 pixel, 8×4 pixel, 4×8 pixel, and 4×4 pixel sub-partitions are illustrated in order from the left.

In other words, in the H.264/AVC format, it is possible to divide a single macroblock into any of 16×16 pixel, 16×8 pixel, 8×16 pixel, and 8×8 partitions, with each having respectively independent motion vector information. Also, it is possible to divide an 8×8 pixel partition into any of 8×8 pixel, 8×4 pixel, 4×8 pixel, and 4×4 pixel sub-partitions, with each having respectively independent motion vector information.

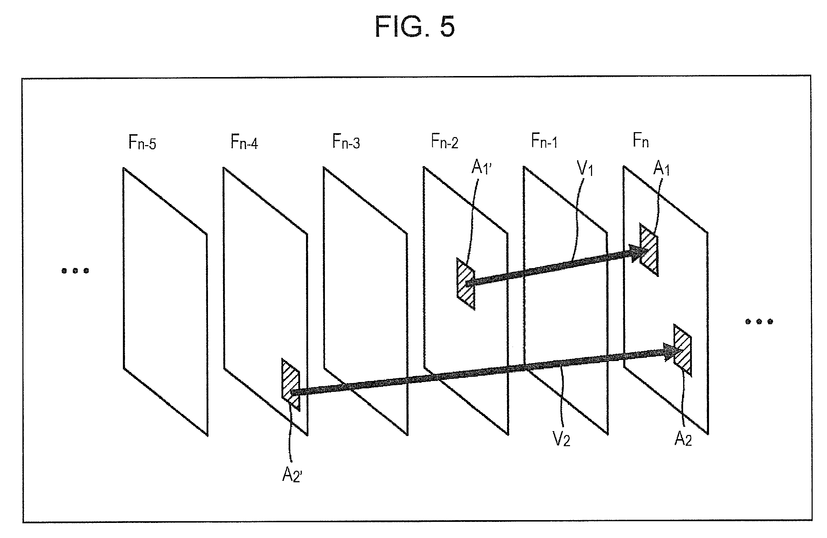

Fig. 5 is a diagram explaining a multi-reference frame motion prediction/compensation process in the H.264/AVC format. In the H.264/AVC format, a multi-reference frame motion prediction/compensation technique is established.

The example in Fig. 5 illustrates a target frame Fn to be encoded now, and already encoded frames Fn-5 to Fn-1. On a time axis, the frame Fn-1 is one frame behind the target frame Fn, the frame Fn-2 is two frames behind the target frame Fn, and the frame Fn-3 is three frames behind the target frame Fn. Also, the frame Fn-4 is four frames behind the target frame Fn, and the frame Fn-5 is five frames behind the target frame Fn. Typically, a reference picture number (ref_id) that decreases with increasing proximity to the target frame Fn on a time axis is attached. In other words, the frame Fn-1 has the smallest reference picture number, and thereafter follow Fn-2 to Fn-5 in order from smallest to largest.

A block A1 and a block A2 are illustrated in the target frame Fn. The block A1 is taken to have a correlation with a block A1' in frame Fn-2 two frames behind, and a motion vector V1 has been estimated. Also, the block A2 is taken to have a correlation with a block A1' in frame Fn-4 four frames behind, and a motion vector V2 has been estimated.

As above, in the H.264/AVC format, a plurality of reference frames are stored in memory, and it is possible to reference different reference frames for a single frame (picture). In other words, a single picture can have respectively independent reference frame information (reference picture numbers (ref_ids)) on a per-block basis, like the block A1 referencing the frame Fn-2 and the block A2 referencing the frame Fn-4, for example.

Herein, a block refers to any of the 16×16 pixel, 16×8 pixel, 8×16 pixel, and 8×8 pixel partitions discussed above with reference to Fig. 4. Reference frames in 8×8 sub-blocks must be the same.

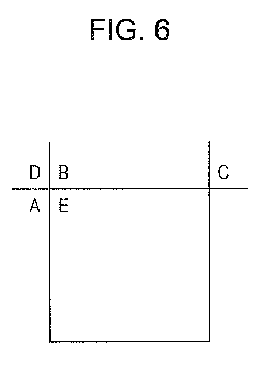

In the H.264/AVC format, an extremely large amount of motion vector information is generated by conducting the motion prediction/compensation process at quarter pixel precision discussed earlier with reference to Fig. 1 and a motion prediction/compensation process like that discussed above with reference to Figs. 4 and 5. Directly encoding this large amount of motion vector information would lead to lowered encoding efficiency. Accordingly, in the H.264/AVC format, reduction of motion vector encoded information is realized by the method illustrated in Fig. 6.

Fig. 6 is a diagram explaining an exemplary motion vector information generation process according to the H. 264/AVC format.

The example in Fig. 6 illustrates a target block E ($16\times16$ pixels, for example) to be encoded now, and blocks A to D which have already been encoded and which are adjacent to the target block E.

Namely, the block D is adjacent to the upper-left of the target block E, the block B is adjacent above the target block E, the block C is adjacent to the upper-right of the target block E, and the block A is adjacent to the left of the target block E. Herein, the blocks A to D are not delimited. This is to indicate that the blocks A to D respectively have one of the configurations from $16\times16$ pixels to $4\times4$ pixels discussed earlier with Fig. 4.

For example, take $mv_x$ to represent motion vector information for X, where X is A, B, C, D, or E. First, predicted motion vector information $pmv_E$ for the target block E is generated by median prediction according to the following Eq. (5) using the motion vector information regarding the blocks A, B, and C.

$$pmv_E = med(mv_A, mv_B, mv_C) \qquad (5)$$

In some cases, motion vector information regarding the block C will not be usable (will be unavailable) because of being at the edge of image or because the block C has not been encoded yet. In such cases, motion vector information regarding the block C is substituted by motion vector information regarding the block D.

Data $mvd_E$ added to a compressed image header as motion vector information for the target block E is generated according to the following Eq. (6).

$$mvd_E = mv_E - pmv_E \qquad (6)$$

In practice, however, the respective vertical and horizontal components of motion vector information are processed independently.

In this way, predicted motion vector information is generated, and by adding the difference between the predicted motion vector information generated by correlation with adjacent blocks and the motion vector information to the header of a compressed image, the motion vector information is reduced.

[Exemplary configuration of motion prediction/compensation unit and interpolation filter switcher]

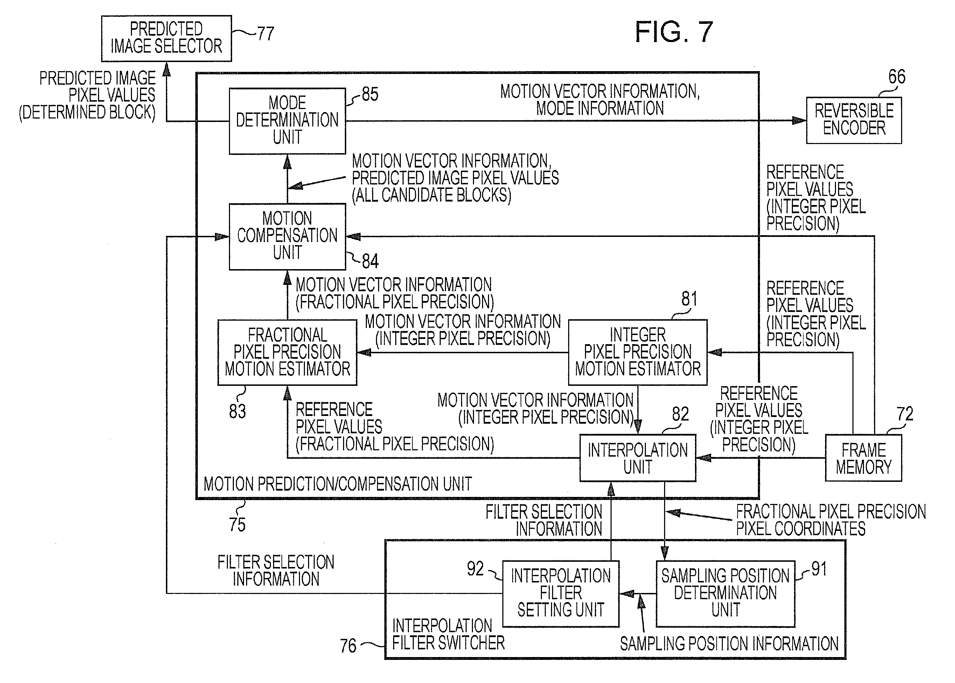

Fig. 7 is a block diagram illustrating an exemplary detailed configuration of the motion prediction/compensation unit 75 and the interpolation filter switcher 76. However, in Fig. 7, the switch 73 in Fig. 3 has been omitted.

In the example in Fig. 7, the motion prediction/compensation unit 75 comprises an integer pixel precision motion estimator 81, an interpolation unit 82, a fractional pixel precision motion estimator 83, a motion compensation unit 84, and a mode determination unit 85. Furthermore, in the motion prediction/compensation unit 75, motion vectors of fractional pixel precision are computed on the basis of the motion estimation method implemented in the JM (Joint Model) discussed earlier with reference to Fig. 2. In other words, motion estimation at integer pixel precision is conducted by the integer pixel precision motion estimator 81, motion estimation at fractional pixel precision is conducted by the fractional pixel precision motion estimator 83, and motion vectors of fractional pixel precision are computed.

The interpolation filter switcher 76 comprises a sampling position determination unit 91 and an interpolation filter setting unit 92.

Reference pixel values of integer pixel precision are supplied to the integer pixel precision motion estimator 81, the fractional pixel precision motion estimator 83, and the motion compensation unit 84 from the frame memory 72. Also, in the example in Fig. 7, although omitted from illustration, an image to be inter processed from the frame sort buffer 62 is also supplied to the integer pixel precision motion estimator 81, the fractional pixel precision motion estimator 83, and the mode determination unit 85.

The integer pixel precision motion estimator 81 uses the image to be inter processed and the reference pixel values of integer pixel precision to conduct motion estimation of a target block at integer pixel precision in all inter prediction modes given as candidates. Computed motion vector information of integer pixel precision for the target block is supplied to the interpolation unit 82 and the fractional pixel precision motion estimator 83.

The interpolation unit 82 uses the reference pixel values of integer pixel precision supplied from the frame memory 72 to compute the coordinates of pixels of fractional pixel precision near pixels of integer pixel precision corresponding to motion vectors detected by the motion prediction/compensation unit 75. The computed coordinate information for pixels of fractional pixel precision is supplied to the sampling position determination unit 91.

The interpolation unit 82 includes an FIR filter having two types of filter coefficients with different numbers of taps. The interpolation unit 82 conducts an interpolation process using a filter indicated by filter selection information from the interpolation filter setting unit 92, and generates pixel values for sampling positions of fractional pixel precision near pixels corresponding to motion vectors detected by the integer pixel precision motion estimator 81. The generated reference pixel values of fractional pixel precision are supplied to the fractional pixel precision motion estimator 83.

The fractional pixel precision motion estimator 83 uses an image to be inter processed, motion vector information of integer pixel precision, and reference pixel values of fractional pixel precision to conduct motion estimation of a target block at fractional pixel precision in all inter prediction modes given as candidates. The computed motion vector information of fractional pixel precision is supplied to the motion compensation unit 84.

The motion compensation unit 84 generates predicted images by interpolating pixel values of fractional pixel precision using reference pixel values of integer pixel precision from the frame memory 72, motion vector information of fractional pixel precision, as well as filter selection information from the interpolation filter setting unit 92. The pixel values for the predicted images of all candidate blocks generated at this point are supplied to the mode determination unit 85 together with corresponding motion vector information, reference frame information, and inter prediction mode information, etc.

The mode determination unit 85 is supplied with an image to be inter processed from the frame sort buffer 62, as well as predicted images for all candidate blocks, motion vector information, reference frame information, and inter prediction mode information, etc. from the motion compensation unit 84.

The mode determination unit 85 uses the supplied information as appropriate to compute cost function values for all inter prediction modes given as candidates. The mode determination unit 85 determines the prediction mode whose cost function value gives the minimum value to be the optimal inter prediction mode, and supplies the predicted image of the block determined to be the optimal inter prediction mode from among the predicted images of all candidate books and its cost function value to the predicted image selector 77.

In the case where the predicted image from the optimal inter prediction mode is selected by the predicted image selector 77, the mode determination unit 85 outputs information indicating the optimal inter prediction mode, motion vector information, and reference frame information, etc. to the reversible encoder 66.

The sampling position determination unit 91, on the basis of the coordinate information for a pixel of fractional pixel precision computed by the interpolation unit 82, determines the sampling position where that pixel is located from among the positions b to d and the positions e1 to e3 in Fig. 1, for example. Information on the determined sampling position is supplied to the interpolation filter setting unit 92.

For example, information indicating that the sampling position is one of the positions b to d and the positions e1 to e3 in Fig. 1, for example, may be given as the information on the determined sampling position. Alternatively, when the sampling position is the position c, for example, the information may indicate that both the horizontal direction and the vertical direction are at half pixel precision. In the latter case, when the sampling position is the position b or the position d, information is supplied which indicates that either the horizontal direction or the vertical direction is at half pixel precision, while the other direction is at integer pixel precision.

The interpolation filter setting unit 92 sets which filter to use from among the filters with two types of filter coefficients included in the interpolation unit 82 according to the sampling position indicated by the information from the sampling position determination unit 91. The interpolation filter setting unit 92 supplies the interpolation unit 82 with filter selection information indicating which filter has been set.

For example, the interpolation filter setting unit 92 may set filter coefficients with respectively different numbers of taps for a sampling position that is fractional pixel precision in either the horizontal direction or the vertical direction and integer pixel precision in the other direction, versus a sampling position that is fractional pixel precision in both directions. Preferably, filter coefficients with fewer taps are set for the latter sampling position compared to the former sampling position.

[Description of interpolation process]

The interpolation process of the interpolation unit 82 will now be described in detail with reference to Fig. 1 again.
The interpolation unit 82 includes two filters: the 6-tap FIR filter {1,-5,20,20,-5,1} defined in the H.264/AVC standard as a first filter, and an FIR filter {-1,5,5,-1} with a smaller number of taps than the first filter as a second filter. Herein, {1,-5,20,20,-5,1} and {-1,5,5,-1} are filter coefficients, wherein the filter coefficients of the second filter have fewer taps than the filter coefficients of the first filter.
The interpolation unit 82 generates pixel values of fractional pixel precision by using at least one of the first filter and the second filter set by the interpolation filter setting unit 92 according to the sampling position.

Herein, in Fig. 1, the position b is a position shifted away from a pixel value of integer pixel precision stored in the frame memory 72 by a half-pixel in the horizontal component and zero pixels in the vertical component. The position d is a position shifted away from a pixel value of integer pixel precision stored in the frame memory 72 by zero pixels in the horizontal component and a half-pixel in the vertical component. Also, the position c is a position shifted away from a pixel value of integer pixel precision stored in the frame memory 72 by a half-pixel in both the vertical and horizontal components.

For pixels of fractional pixel precision corresponding to sampling positions at the position b and the position d, the interpolation unit 82 uses the first filter to perform the sum-of-products operation in Eq. (2) discussed earlier, thereby obtaining pixel values corresponding to sampling positions at the position b and the position d.

Also, at the same time the interpolation unit 82 uses the second filter to generate either the intermediate value B expressed by the following Eq. (7) or an intermediate value C.

[Expression 5]

$$B, D = (-1) \cdot A_{-1} + 5 \cdot A_0 + 5 \cdot A_1 + (-1) \cdot A_2 \qquad (7)$$

Herein, the intermediate value B is a value corresponding to a position shifted away from a pixel value of integer pixel precision stored in the frame memory 72 by a half-pixel in the horizontal component and zero pixels in the vertical component, similarly to the pixel value of the position b in Fig. 1. The intermediate value D is a value corresponding to a position shifted away from a pixel value of integer pixel precision stored in the frame memory 72 by zero pixels in the horizontal component and a half-pixel in the vertical component, similarly to the pixel value of the position d in Fig. 1.

For fractional pixel precision corresponding to a sampling position at the position c, the interpolation unit 82 uses the intermediate value B or the intermediate value D and the second filter to perform the sum-of-products operation expressed in the following Eq. (8), thereby obtaining a pixel value corresponding to a sampling position at the position c.

[Expression 6]

$$F = (-1) \cdot B_{-1} + 5 \cdot B_0 + 5 \cdot B_1 + (-1) \cdot B_2$$

or

$$F = (-1) \cdot D_{-1} + 5 \cdot D_0 + 5 \cdot D_1 + (-1) \cdot D_2$$

$$c = Clip1((F+32) >> 6) \qquad (8)$$

Herein, both of the sum-of-products processes in the horizontal direction and the vertical direction are conducted, and then lastly the Clip process is executed only once.

Additionally, the interpolation unit 82 also uses the pixel value corresponding to a sampling position at the position c that was computed as above to compute pixel values corresponding to the positions e1 to e3 by means of processing similar to Eq. (4) discussed earlier.

Although the foregoing describes a case where the sampling positions are the positions b to d and the positions e1 to e3 illustrated in Fig. 1, a similar process using the pixel values of relatively similar positions, etc. is conducted in cases of other positions.

In the interpolation filter setting unit 92, a filter is set according to the sampling position to be interpolated such that an interpolation process as above can be conducted.

By switching the filter in this way depending on the sampling position to be interpolated, it becomes possible to reduce computation that acts as a processing bottleneck when generating pixel values for the position c and the position e3 in Fig. 1, for example.

[Description of encoding process in image encoding apparatus]

Next, an encoding process in the image encoding apparatus 51 in Fig. 3 will be described with reference to the flowchart in Fig. 8.

In a step S11, the A/D converter 61 A/D converts input images. In a step S12, the frame sort buffer 62 stores images supplied by the A/D converter 61, and sorts them from the order in which to display individual pictures into the order in which to encode.

In a step S13, the arithmetic unit 63 computes the difference between an image sorted in step S12 and a predicted image. The predicted image is supplied to the arithmetic unit 63 via the predicted image selector 77, and is supplied from the motion prediction/compensation unit 75 in the case of inter predicting, or from the intra prediction unit 74 in the case of intra predicting.

The difference data has a smaller data size compared to the original image data. Consequently, the data size can be compressed compared to the case of encoding an image directly.

In a step S14, the orthogonal transform unit 64 applies an orthogonal transform to difference information supplied from the arithmetic unit 63. Specifically, an orthogonal transform such as the discrete cosine transform or the Karhunen-Loeve transform is applied, and transform coefficients are output. In a step S15, the quantizer 65 quantizes the transform coefficients. During this quantization the rate is controlled, as described in the processing in a step S25 later discussed.

The difference information that has been quantized in this way is locally decoded as follows. Namely, in a step S16, the reverse quantization unit 68 reverse quantizes transform coefficients that have been quantized by the quantizer 65, with characteristics corresponding to the characteristics of the quantizer 65. In a step S17, the inverse orthogonal transform unit 69 applies an inverse orthogonal transform to transform coefficients that have been reverse quantized by the reverse quantization unit 68, with characteristics corresponding to the characteristics of the orthogonal transform unit 64.

In a step S18, the arithmetic unit 70 adds a predicted image input via the predicted image selector 77 to locally decoded difference information, and generates a locally decoded image (an image corresponding to the input into the arithmetic unit 63). In a step S19, the deblocking filter 71 filters an image output by the arithmetic unit 70. In so doing, blocking artifacts are removed. In a step S20, the frame memory 72 stores the filtered image. Meanwhile, an image that has not been filtered by the deblocking filter 71 is also supplied from the arithmetic unit 70 to the frame memory 72 and stored.

In a step S21, the intra prediction unit 74 and the motion prediction/compensation unit 75 respectively conduct an image prediction process. In other words, in step S21, the intra prediction unit 74 conducts an intra prediction process in intra prediction modes, while the motion prediction/compensation unit 75 conducts a motion prediction/compensation process in inter prediction modes.

At this point, in the motion prediction/compensation unit 75, pixel values for sampling positions are generated using a filter set by the interpolation filter switcher 76 according to sampling positions corresponding to the coordinates of pixels of fractional pixel precision. These pixel values are then used to compute motion vectors of fractional pixel precision.

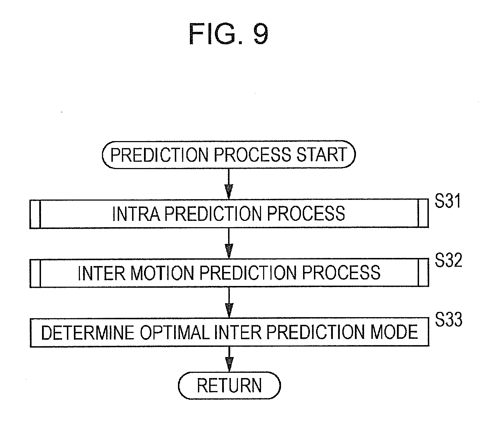

Details of the prediction process in step S21 will be discussed later with reference to Fig. 9, but as a result of this process, a prediction process is respectively conducted in all intra prediction modes given as candidates, and a cost function value is respectively computed for all intra prediction modes given as candidates. Then, the optimal intra prediction mode is selected on the basis of the computed cost function values, and the predicted image generated by intra prediction in the optimal intra prediction mode and its cost function value are supplied to the predicted image selector 77.

Also, as a result of this process, a prediction process is respectively conducted in all inter prediction modes given as candidates, and a cost function value is respectively computed for all inter prediction modes given as candidates. The optimal inter prediction mode is determined from among the inter prediction modes on the basis of the computed cost function values, and the predicted image generated with the optimal inter prediction mode and its cost function value are supplied to the predicted image selector 77.

In a step S22, the predicted image selector 77 determines the optimal prediction mode from between the optimal intra prediction mode and the optimal inter prediction mode, on the basis of their respective cost function values output by the intra prediction unit 74 and the motion prediction/compensation unit 75. Then, the predicted image selector 77 selects the predicted image of the optimal prediction mode thus determined, and supplies it to the arithmetic units 63 and 70. As discussed earlier, this predicted image is used in the computation in steps S13 and S18.

Herein, this predicted image selection information is supplied to the intra prediction unit 74 or the motion prediction/compensation unit 75. In the case where the predicted image of the optimal intra prediction mode is selected, the intra prediction unit 74 supplies information indicating the optimal intra prediction mode (or in other words, intra prediction mode information) to the reversible encoder 66.

In the case where the predicted image of the optimal inter prediction mode is selected, the motion prediction/compensation unit 75 outputs information indicating the optimal inter prediction mode, and if necessary, information that depends on the optimal inter prediction mode, to the reversible encoder 66. Motion vector information, flags, reference frame information, etc. may be cited as information that depends on the optimal inter prediction mode.

In a step S23, the reversible encoder 66 encodes quantized transform coefficients output by the quantizer 65. In other words, a difference image is reversibly encoded by variable-length encoding or arithmetic coding, etc. and compressed. At this point, the intra prediction mode information from the intra prediction unit 74 or the information that depends on the optimal inter prediction mode from the motion prediction/compensation unit 75, etc. that was input into the reversible encoder 66 in step S22 discussed above is also encoded and added to the header information.

In a step S24, the accumulation buffer 67 stores a difference image as a compressed image. Compressed images stored in the accumulation buffer 67 are read out as appropriate and transmitted to a decoder via a transmission path.

In a step S25, the rate controller 78 controls the rate of quantization operations by the quantizer 65 such that overflow or underflow does not occur, on the basis of compressed images stored in the accumulation buffer 67.

[Description of prediction process]

Next, the prediction process in step S21 of Fig. 8 will be described with reference to the flowchart in Fig. 9.

In the case where the image to be processed that is supplied from the frame sort buffer 62 is an image of blocks to be intra processed, already-decoded images to be referenced are read out from the frame memory 72 and supplied to the intra prediction unit 74 via the switch 73. On the basis of these images, the intra prediction unit 74 intra predicts pixels in the blocks to be processed in all intra prediction modes given as candidates in a step S31. Herein, pixels that have not been filtered by the deblocking filter 71 are used as the already-decoded pixels to be referenced.

Details of the intra prediction process in step S31 will be discussed later with reference to Fig. 10, but as a result of this process, intra prediction is conducted in all intra prediction modes given as candidates, and a cost function value is computed for all intra prediction modes given as candidates. Then, the optimal intra prediction mode is selected on the basis of the computed cost function values, and the predicted image generated by intra prediction in the optimal intra prediction mode and its cost function value are supplied to the predicted image selector 77.

In the case where the image to be processed that is supplied from the frame sort buffer 62 is an image to be inter processed, images to be referenced are read out from the frame memory 72 and supplied to the motion prediction/ compensation unit 75 via the switch 73. On the basis of these images, the motion prediction/compensation unit 75 conducts an inter motion prediction process in a step S32. In other words, the motion prediction/compensation unit 75 references images supplied from the frame memory 72 and conducts a motion prediction process in all inter prediction modes given as candidates.

Meanwhile, at this point, the interpolation filter switcher 76 sets a filter to be used for interpolation according to sampling positions corresponding to the coordinates of pixels of fractional pixel precision near a pixel of integer pixel precision, which corresponds to a motion vector detected by the motion prediction/compensation unit 75. The motion prediction/compensation unit 75 generates pixel values at the sampling positions using the filter set by the interpolation filter switcher 76, and uses them to compute a motion vector of fractional pixel precision. Then, the motion prediction/ compensation unit 75 performs a compensation process on the reference images and generates a predicted image on the basis of the motion vector of fractional pixel precision.

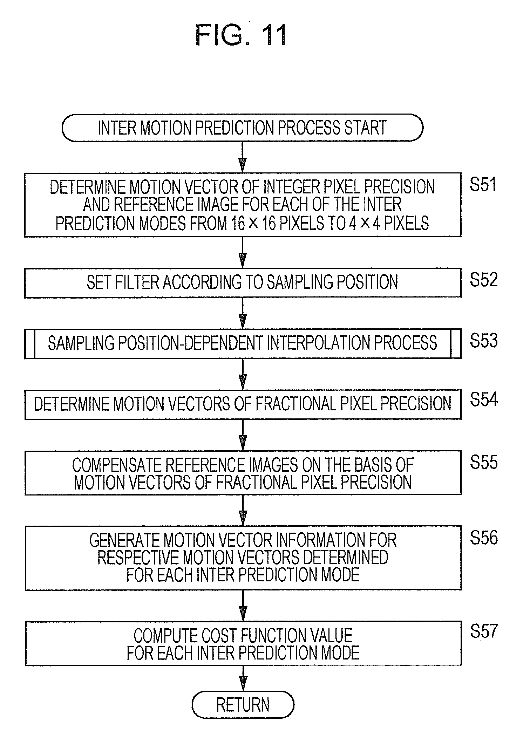

Details of the inter motion prediction process in step S32 will be discussed later with reference to Fig. 11, but as a result of this process, a motion prediction process is conducted in all inter prediction modes given as candidates, and a cost function value is computed for all inter prediction modes given as candidates.

In a step S33, the mode determination unit 85 of the motion prediction/compensation unit 75 compares the cost function values for the inter prediction modes computed in step S32. The mode determination unit 85 determines the optimal inter prediction mode to be the prediction mode that gives the minimum value, and supplies the predicted image generated with the optimal inter prediction mode and its cost function value to the predicted image selector 77.

[Description of intra prediction process]

Next, the intra prediction process in step S31 of Fig. 9 will be described with reference to the flowchart in Fig. 10. Herein, in the example in Fig. 10, the case of a luma signal is described as an example.

In a step S41, the intra prediction unit 74 conducts intra prediction in respective intra prediction modes of $4 \times 4$ pixels, $8 \times 8$ pixels, and $16 \times 16$ pixels.

Among intra prediction modes for luma signals, there are prediction modes with nine types of $4 \times 4$ pixel and $8 \times 8$ pixel block units, as well as four types of $16 \times 16$ pixel macroblock units. Among intra prediction modes for chroma signals, there are prediction modes with four types of $8 \times 8$ pixel block units. It is possible to set the intra prediction mode for chroma signals independently of the intra prediction mode for luma signals. For the $4 \times 4$ pixel and $8 \times 8$ pixel intra prediction modes for luma signals, one intra prediction mode is defined for $4 \times 4$ pixel and $8 \times 8$ pixel block of a luma signal. For the $16 \times 16$ pixel intra prediction mode for luma signals and the intra prediction modes for chroma signals, one prediction mode is defined for one macroblock.

Specifically, the intra prediction unit 74 reads out the pixels of a block to be processed from the frame memory 72 and intra predicts while referencing already-decoded images supplied via the switch 73. By conducting this intra prediction process in each intra prediction mode, a predicted image is generated in each intra prediction mode. Herein, pixels which have not been filtered by the deblocking filter 71 are used as the already-decoded pixels to be referenced.

In a step S42, the intra prediction unit 74 computes a cost function value for the respective 4×4 pixel, 8×8 pixel, and 16×16 pixel intra prediction modes. At this point, computation of a cost function value is conducted on the basis of either a high-complexity mode or a low-complexity mode technique. These modes are defined in the JM, the reference software in the H.264/AVC format.

In other words, in the high-complexity mode, the processing in step S41 involves provisionally conducting the encoding process in all prediction modes given as candidates. Additionally, a cost function value expressed by the following Eq. (9) is computed for each prediction mode, and the prediction mode that gives the minimum value is selected as the optimal prediction mode.

$$\mathrm{Cost(Mode)=D+\lambda\cdot R} \qquad\qquad (9)$$

D is the difference (distortion) between the original image and the decoded image, R is the bit rate including the orthogonal transform coefficients, and λ is the Lagrange multiplier given as a function of a quantization parameter QP.

Meanwhile, in the low-complexity mode, the processing step S41 involves generating a predicted image and computing header bits such as motion vector information, prediction mode information, and flag information for all prediction modes given as candidates. Additionally, a cost function value expressed by the following Eq. (10) is computed for each prediction mode, and the prediction mode that gives the minimum value is selected as the optimal prediction mode.

$$\mathrm{Cost(Mode)=D+QPtoQuant(QP)\cdot Header\_Bit} \qquad\qquad (10)$$

D is the difference (distortion) between the original image and decoded image, Header_Bit is the number of header bits for the prediction mode, and QPtoQuant is a function given as a function of a quantization parameter QP.

In the low-complexity mode, since only predicted images are generated in all prediction modes and it is not necessary to conduct an encoding process and a decoding process, computation is reduced.

In a step S43, the intra prediction unit 74 respectively determines the optimal mode for each of the 4×4 pixel, 8×8 pixel, and 16×16 pixel intra prediction modes. In other words, as discussed earlier, there are nine types of prediction modes for the case of the intra 4×4 prediction modes and the intra 8×8 prediction modes, and there are four types of prediction modes for the case of the intra 16×16 prediction modes. Consequently, the intra prediction unit 74 takes the cost function values computed in step S42 as a basis and from among them determines the optimal intra 4×4 prediction mode, the optimal intra 8×8 prediction mode, and the optimal 16×16 prediction mode.

In a step S44, the intra prediction unit 74 selects the optimal intra prediction mode from among the respective optimal modes determined for the respective 4×4 pixel, 8×8 pixel, and 16×16 pixel intra prediction modes, on the basis of the cost function values computed in step S42. In other words, the mode whose cost function value is the minimum value from among the respective optimal modes determined for 4×4 pixels, 8×8 pixels, and 16×16 pixels is selected as the optimal intra prediction mode. Then, the intra prediction unit 74 supplies the predicted image generated with the optimal intra prediction mode and its cost function value to the predicted image selector 77.

[Description of inter motion prediction process]

Next, the inter prediction process in step S32 of Fig. 9 will be described with reference to the flowchart in Fig. 11. Herein, in the motion prediction/compensation unit 75, motion vectors of integer pixel precision and motion vectors of fractional pixel precision are computed on the basis of the motion estimation method implemented in the JM discussed earlier with reference to Fig. 2.

In a step S51, the integer pixel precision motion estimator 81 determines respective motion vectors of integer pixel precision and reference images for each of the eight types of inter prediction modes consisting of from 16×16 pixels to 4×4 pixels as discussed earlier with reference to Fig. 4.

In other words, the integer pixel precision motion estimator 81 is supplied with an image to be inter processed from the frame sort buffer 62 and reference pixel values of integer pixel precision from the frame memory 72. The integer pixel precision motion estimator 81 uses these images to compute, for each inter prediction mode, a reference image and a motion vector of integer pixel precision that minimizes the cost function value within a given search range of candidate reference images. At this point, SAD (Sum of Absolute Differences) etc. may be used as the cost function value, for example. In so doing, a motion vector of integer pixel precision and a reference images are respectively determined for a block to be processed in each inter prediction mode, with the motion vector information of integer pixel precision being supplied to the interpolation unit 82.

Accordingly, the interpolation unit 82 uses reference pixel values of integer pixel precision supplied from the frame memory 72 to compute the coordinates of pixels of fractional pixel precision near a pixel of integer pixel precision (a pixel at the position A in Fig. 1, for example) corresponding to a motion vector detected by the motion prediction/compensation unit 75. The computed coordinate information for pixels of fractional pixel precision is supplied to the sampling position determination unit 91.

The sampling position determination unit 91, on the basis of coordinate information for a pixel of fractional pixel precision computed by the interpolation unit 82, determines the sampling position where that pixel is located from among the positions b to d and the positions e1 to e3 in Fig. 1. Information on that sampling position is supplied to the interpolation filter setting unit 92.

In a step S52, the interpolation filter setting unit 92 sets which filter to use from among the filters with two types of filter coefficients included in the interpolation unit 82 according to a sampling position indicated by information from the sampling position determination unit 91.

In other words, the interpolation filter setting unit 92 sets the use of the first filter for pixels corresponding to sampling positions at the position b and the position d. Meanwhile, at this point the interpolation filter setting unit 92 also sets the second filter for generating an intermediate value B and an intermediate value D in order to generate pixels corresponding to sampling positions at the position c.

Also, the interpolation filter setting unit 92 sets the use of the second filter for pixels corresponding to sampling positions at the position c.

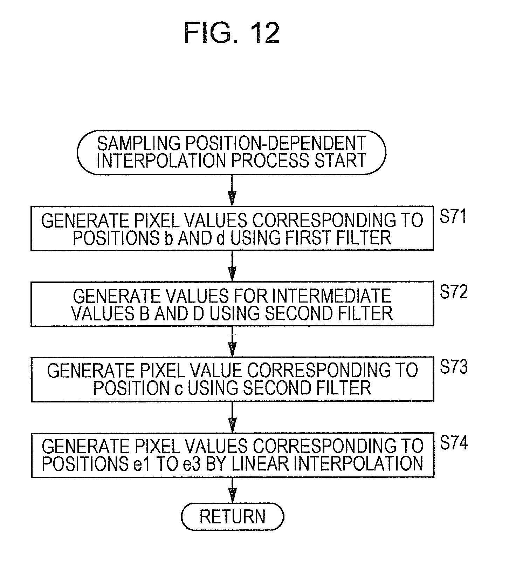

In a step S53, the interpolation unit 82 uses the filters set by the interpolation filter setting unit 92 to conduct a sampling position-dependent interpolation process. Details of this interpolation process will be discussed later with reference to Fig. 12.

According to the processing in step S53, pixel values are generated for sampling positions of fractional pixel precision near pixels corresponding to motion vectors detected by the integer pixel precision motion estimator 81. The generated reference pixel values of fractional pixel precision are supplied to the fractional pixel precision motion estimator 83.

In a step S55, the fractional pixel precision motion estimator 83 conducts motion estimation of a target block at fractional pixel precision in all inter prediction modes given as candidates, and determines motion vectors of fractional pixel precision.

In other words, the fractional pixel precision motion estimator 83 is supplied with an image to be inter processed from the frame sort buffer 62, motion vector information of integer pixel precision from the integer pixel precision motion estimator 81, and reference pixel values of fractional pixel precision from the interpolation unit 82.

The fractional pixel precision motion estimator 83 uses this information to compute the pixel (the pixel 6 in Fig. 2, for example) whose pixel value minimizes a cost function value such as SAD from among the pixels of half pixel precision near a pixel (the pixel E in Fig. 2, for example) corresponding to a motion vector of integer pixel precision. This pixel (the pixel 6 in Fig. 2, for example) is taken to be the pixel corresponding to the optimal motion vector of half pixel precision. Furthermore, the fractional pixel precision motion estimator 83 computes the pixel (the pixel b in Fig. 2, for example) whose pixel value minimizes a cost function value from among the pixels of quarter pixel precision near a pixel corresponding to the optimal motion vector of half pixel precision. In so doing, the motion vector corresponding to the computed pixel becomes the optimal motion vector of quarter pixel precision, and the optimal motion vector of quarter pixel precision is computed.

Motion vector information of fractional pixel precision determined by the fractional pixel precision motion estimator 83 is supplied to the motion compensation unit 84.

In a step S55, the motion compensation unit 84 compensates a reference image on the basis of the motion vectors of fractional pixel precision from the fractional pixel precision motion estimator 83.

In other words, the motion compensation unit 84 is supplied with reference pixel values of integer pixel precision from the frame memory 72, motion vector information of fractional pixel precision, as well as filter selection information from the interpolation filter setting unit 92. The motion compensation unit 84 uses this information to generate predicted images by interpolating pixel values of fractional pixel precision. The pixel values of the predicted images for all candidate blocks generated at this point are supplied to the mode determination unit 85 together with corresponding motion vector information, reference frame information, and inter prediction mode information, etc.

In a step S56, the mode determination unit 85 generates motion vector information $mvd_E$ for the respective motion vectors determined for each of the eight types of inter prediction modes consisting of from $16 \times 16$ pixels to $4 \times 4$ pixels. At this point, the motion vector generation method discussed earlier with reference to Fig. 6 is used.

In other words, the mode determination unit 85 uses adjacent block motion vector information to compute predicted motion vector information $pmv_E$ for a target block E by means of the median prediction of Eq. (5) discussed earlier. Then, as illustrated in Eq. (6) discussed earlier, the mode determination unit 85 computes motion vector information $mvd_E$ by taking the difference between motion vector information $mv_E$ from the fractional pixel precision motion estimator 83 and the predicted motion vector information $pmv_E$ thus computed.

The computed motion vector information is also used when computing cost function values in a following step S57, and in the case where the corresponding predicted image is ultimately selected by the predicted image selector 77, is output to the reversible encoder 66 together with prediction mode information and reference frame information, etc.

In step S57, the mode determination unit 85 computes the cost function value expressed in Eq. (9) or Eq. (10) discussed earlier for each of the eight types of inter prediction modes consisting of from $16 \times 16$ pixels to $4 \times 4$ pixels.

In other words, the mode determination unit 85 is supplied with predicted image pixel values, motion vector information, and reference frame information from the motion compensation unit 84, an image to be inter processed from the frame sort buffer 62, and reference frame information, etc. The mode determination unit 85 uses the supplied information and the motion vector information computed in step S56 as appropriate to compute a cost function value for all inter prediction modes given as candidates. The cost function values computed at this point are used when determining the optimal inter prediction mode in step S33 of Fig. 9 discussed earlier.

[Description of sampling position-dependent interpolation process]

Next, the sampling position-dependent interpolation process in step S53 of Fig. 11 will be described with reference to the flowchart in Fig. 12. The example in Fig. 12 describes a case where the positions b to d and the positions e1 to e3 illustrated in Fig. 1 are given as sampling positions. However, although illustration and description thereof is reduced or omitted, a similar process using the pixel values of relatively similar positions, etc. is conducted in cases of other positions.

In a step S71, the interpolation unit 82 uses the first filter set by the interpolation filter setting unit 92 to generate pixel values corresponding to the position b and the position d in Fig. 1 by performing the sum-of-products operation in Eq. (2) discussed earlier.

In a step S72, the interpolation unit 82 uses the second filter set by the interpolation filter setting unit 92 to generate values for the intermediate values B and D in Eq. (7) discussed earlier.

Furthermore, in a step S73, the interpolation unit 82 uses the second filter set by the interpolation filter setting unit 92 to generate a pixel value corresponding to the position c in Fig. 1 by performing the sum-of-products operation expressed in Eq. (8) discussed earlier.

Then, in a step S74, the interpolation unit 82 uses necessary pixel values of integer pixel precision and generated pixel values from among the pixel values for the positions b to d to generate pixel values corresponding to the positions e1 to e3 in Fig. 1 by means of the linear interpolation in Eq. (4) discussed earlier.

Reference pixel values of fractional pixel precision generated in this way are supplied to the fractional pixel precision motion estimator 83 and used to estimate motion vectors of fractional pixel precision.

A compressed image thus encoded is transmitted via a given transmission path and decoded by an image decoding apparatus.

[Exemplary configuration of image decoding apparatus]

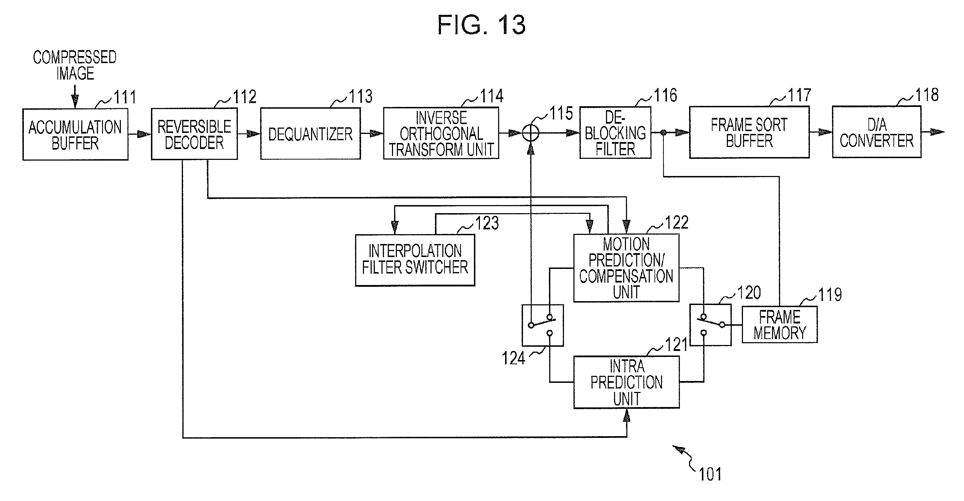

Fig. 13 illustrates a configuration of an embodiment of an image decoding apparatus as an image processing apparatus to which the present invention has been applied.

An image decoding apparatus 101 is composed of an accumulation buffer 111, a reversible decoder 112, a dequantizer 113, an inverse orthogonal transform unit 114, an arithmetic unit 115, a deblocking filter 116, a frame sort buffer 117, a D/A converter 118, frame memory 119, a switch 120, an intra prediction unit 121, a motion prediction/compensation unit 122, an interpolation filter switcher 123, and a switch 124.

The accumulation buffer 111 accumulates transmitted compressed images. The reversible decoder 112 decodes information that has been encoded by the reversible encoder 66 in Fig. 3 and supplied by the accumulation buffer 111 in a format corresponding to the encoding format of the reversible encoder 66. The dequantizer 113 dequantizes an image decoded by the reversible decoder 112 in a format corresponding to the quantization formation of the quantizer 65 in Fig. 3. The inverse orthogonal transform unit 114 applies an inverse orthogonal transform to the output of the dequantizer 113 in a format corresponding to the orthogonal transform format of the orthogonal transform unit 64 in Fig. 3.

The inverse orthogonally transformed output is added to a predicted image supplied from the switch 124 by the arithmetic unit 115 and decoded. After removing blocking artifacts from the decoded image, the deblocking filter 116 supplies it to the frame memory 119, where it is accumulated and also output to the frame sort buffer 117.

The frame sort buffer 117 sorts images, or in other words, takes an order of frames that have been sorted in encoding order by the frame sort buffer 62 in Fig. 3, and sorts them in their original display order. The D/A converter 118 D/A converts images supplied from the frame sort buffer 117 and outputs them for display to a display not illustrated.

The switch 120 reads out images to be inter processed and images to be referenced from the frame memory 119 and outputs them to the motion prediction/compensation unit 122, and in addition, reads out images to be used for intra prediction from the frame memory 119 and outputs them to the intra prediction unit 121.

The intra prediction unit 121 is supplied with information from the reversible decoder 112. The information indicates an intra prediction mode and is obtained by decoding header information. The intra prediction unit 121 generates predicted images on the basis of this information, and outputs generated predicted images to the switch 124.

From among the information obtained by decoding header information, the motion prediction/compensation unit 122 is supplied with prediction mode information, motion vector information, and reference frame information, etc. from the reversible decoder 112. In the case where information indicating an inter prediction mode is supplied, the motion prediction/compensation unit 122 generates pixel values of a predicted image corresponding to a target block. At this point, a filter indicated by filter selection information from the interpolation filter switcher 123, motion vector information, as well as reference pixel values of integer pixel precision obtained from the frame memory 119 are used to generate the pixel values of a predicted image. The generated pixel values of a predicated image are supplied to the arithmetic unit 115 via the switch 124.

The interpolation filter switcher 123 is supplied from motion vector information from the motion prediction/ compensation unit 122. The interpolation filter switcher 123 determines the sampling positions corresponding to the coordinates of pixels which correspond to motion vectors, and sets a filter using sampling position-dependent interpolation. Filter selection information indicating which filter has been set by the interpolation filter switcher 123 is supplied to the motion prediction/compensation unit 122.

The switch 124 selects a predicted image generated by the motion prediction/compensation unit 122 or the intra prediction unit 121 and supplies it to the arithmetic unit 115.

Herein, in the image encoding apparatus 51 in Fig. 3, an interpolation process is conducted for all sampling positions near motion vector information of integer pixel precision illustrated in Fig. 2, as discussed earlier with reference to Fig. 11, etc. In contrast, in this image decoding apparatus 101, an interpolation process is only conducted for sampling positions computed in the image encoding apparatus 51, on the basis of motion vector information that has been encoded and sent.

[Exemplary configuration of motion prediction/compensation unit and interpolation filter switcher]

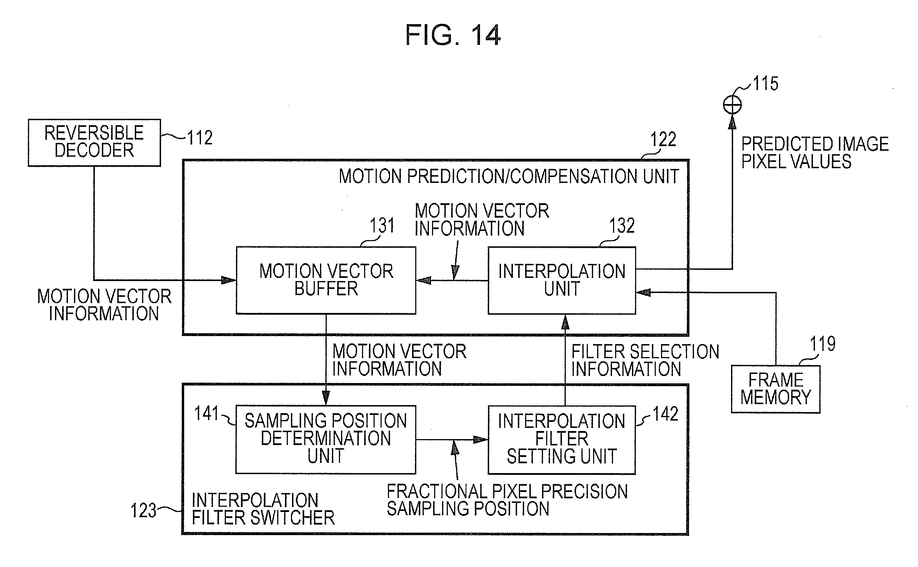

Fig. 14 is a block diagram illustrating an exemplary detailed configuration of the motion prediction/compensation unit 122 and the interpolation filter switcher 123. Herein, in Fig. 14, the switches 120 and 124 in Fig. 13 have been omitted.

In the example in Fig. 14, the motion prediction/compensation unit 122 is composed of a motion vector buffer 131 and an interpolation unit 132.

The interpolation filter switcher 123 is composed of a sampling position determination unit 141 and an interpolation filter setting unit 142.

The motion vector buffer 131 is supplied with motion vector information for a target block from the reversible decoder 112 (or in other words, the image encoding apparatus 51), which is accumulated.

The interpolation unit 132 includes an FIR filter having two types of filter coefficients with different numbers of taps. The interpolation unit 132 reads out motion vector information from the motion vector buffer 131.

The interpolation unit 132 generates pixel values of a predicted image corresponding to the target block using the read-out motion vector information, a filter indicated by filter selection information from the interpolation filter switcher 123, and reference pixel values of integer pixel precision obtained from the frame memory 119. The generated pixel values of a predicted image are supplied to the arithmetic unit 115 via the switch 124.

The sampling position determination unit 141 reads out motion vector information from the motion vector buffer 131, and determines which sampling position the motion-vector information is related to, from among the positions b to d and the positions e1 to e3 in Fig. 1, for example. Information on the determined sampling position is supplied to the interpolation filter setting unit 142.

The interpolation filter setting unit 142 sets which filter to use from among the two types of filters included in the interpolation unit 132, according to the sampling position indicated by information from the sampling position determination unit 91. The interpolation filter setting unit 142 supplies the interpolation unit 132 with filter selection information indicating which filter has been set.

For example, the interpolation filter setting unit 142 may set filter coefficients with respectively different numbers of taps for a sampling position that is fractional pixel precision in either the horizontal direction or the vertical direction and integer pixel precision in the other direction, versus a sampling position that is fractional pixel precision in both directions. Preferably, filter coefficients with fewer taps are set for the latter sampling position compared to the former sampling position.

[Description of decoding process in image decoding apparatus]

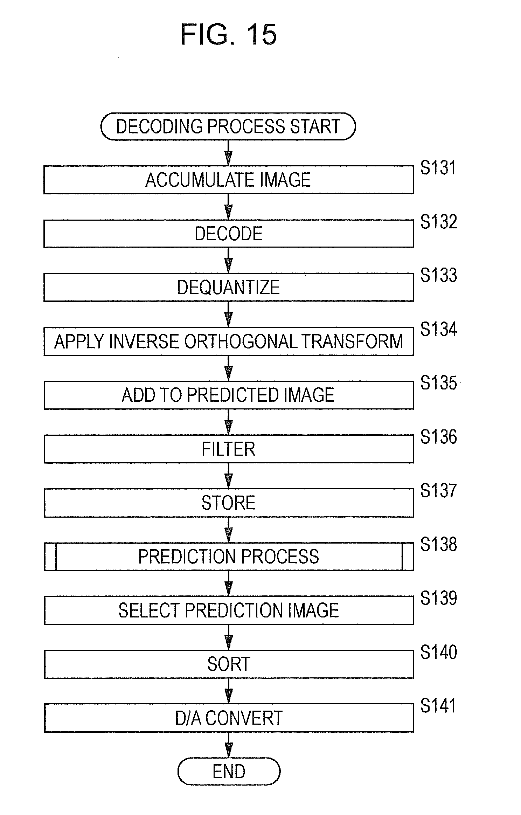

Next, a decoding process executed by the image decoding apparatus 101 will be described with reference to the flowchart in Fig. 15.

In a step S131, the accumulation buffer 111 accumulates transmitted images. In a step S132, the reversible decoder 112 decodes compressed images supplied from the accumulation buffer 111. In other words, I-pictures, P-pictures, and B-pictures that have been encoded by the reversible encoder 66 in Fig. 3 are decoded.

At this point, motion vector information, reference frame information, prediction mode information (information indicating an intra prediction mode or an inter prediction mode), etc. are also decoded.

In other words, in the case where the prediction mode information is intra prediction mode information, the prediction mode information is supplied to the intra prediction unit 121. In the case where the prediction mode information is inter prediction mode information, motion vector information and reference frame information corresponding to the prediction mode information is supplied to the motion prediction/compensation unit 122.

In a step S133, the dequantizer 113 dequantizes transform coefficients decoded by the reversible decoder 112, with characteristics corresponding to the characteristics of the quantization unit 65 in Fig. 3. In a step S134, the inverse orthogonal transform unit 114 applies an inverse orthogonal transform to transform coefficients dequantized by the dequantizer 113, with characteristics corresponding to the characteristics of the orthogonal transform unit 64 in Fig. 3. In so doing, difference information corresponding to the input into the orthogonal transform unit 64 in Fig. 3 (the output from the arithmetic unit 63) is decoded.

In a step S135, the arithmetic unit 115 adds the difference information to a predicted image that has been selected by the processing in a step S141 later discussed and input via the switch 124. In so doing, an original image is decoded. In a step S136, the deblocking filter 116 filters the image output by the arithmetic unit 115. In so doing, blocking artifacts are removed. In a step S137, the frame memory 119 stores the filtered image.

In a step S138, the intra prediction unit 121 or the motion prediction/compensation unit 122 conducts a respective image prediction process corresponding to prediction mode information supplied from the reversible decoder 112.

In other words, in the case where intra prediction mode information is supplied from the reversible decoder 112, the intra prediction unit 121 conducts an intra prediction process in an intra prediction mode. In the case where inter prediction mode information is supplied from the reversible decoder 112, the motion prediction/compensation unit 122 conducts a motion prediction/compensation process in an inter prediction mode. At this point, the motion prediction/compensation unit 122 generates pixel values of a predicted image corresponding to a target block using filters set by the interpolation filter switcher 123, motion vector information, as well as reference pixel values of integer pixel precision obtained from the frame memory 119.

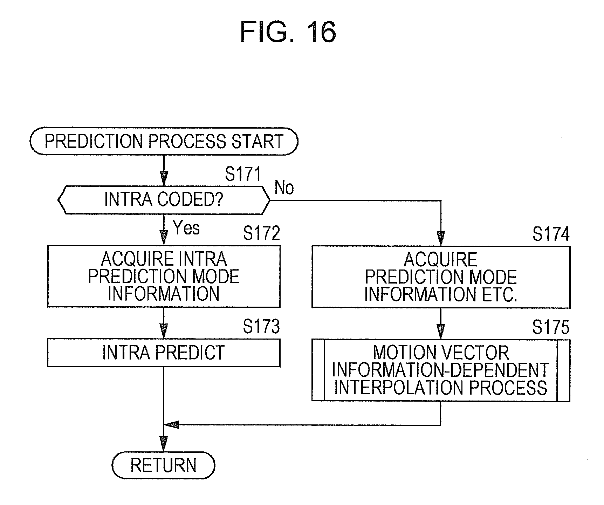

Details of the prediction process in step S138 will be discussed later with reference to Fig. 16, but as a result of this process, a predicted image generated by the intra prediction unit 121 or a predicted image generated by the motion prediction/compensation unit 122 is supplied to the switch 124.

In a step S139, the switch 124 selects a predicted image. In other words, a predicted image generated by the intra prediction unit 121 or a predicted image generated by the motion prediction/compensation unit 122 is supplied. Consequently, a supplied predicted image is selected and supplied to the arithmetic unit 115, and as discussed earlier, added to the output from the inverse orthogonal transform unit 114 in step S134.

In a step S140, the frame sort buffer 117 conducts a sort. In other words, a frame order sorted for encoding by the frame sort buffer 62 in the image encoding apparatus 51 is sorted into the original display order.

In a step S141, the D/A converter 118 D/A converts an image from the frame sort buffer 117. This image is output to a display not illustrated, and the image is displayed.

[Description of prediction process in image decoding apparatus]

Next, the prediction process in step S138 of Fig. 15 will be described with reference to the flowchart in Fig. 16.

In a step S171, the intra prediction unit 121 determines whether or not a target block is intra coded. If intra prediction mode information is supplied to the intra prediction unit 121 from the reversible decoder 112, the intra prediction unit 121 determines that the target block is intra coded in step S171, and the process proceeds to a step S172.

In a step S172, the intra prediction unit 121 acquires intra prediction mode information, and in a step S173, conducts intra prediction.

In other words, in the case where the image to be processed is an intra processed image, necessary images are read out from the frame memory 119 and supplied to the intra prediction unit 121 via the switch 120. In a step S173, the intra prediction unit 121 intra predicts in accordance with the intra prediction mode information acquired in step S172 and generates a predicted image. The predicted image thus generated is output to the switch 124.

On the other hand, in the case where it is determined in step S171 that a target block is not intra coded, the process proceeds to a step S174.

In step S174, the motion prediction/compensation unit 122 acquires prediction mode information, etc. from the reversible decoder 112.

In the case where the image to be processed is an inter processed image, inter prediction mode information, reference frame information, and motion vector information is supplied to the motion prediction/compensation unit 122 from the reversible decoder 112. In this case, the motion prediction/compensation unit 122 acquires inter prediction mode information, reference frame information, and motion vector information in step S174. Meanwhile, acquired motion vector information is accumulated in the motion vector buffer 131.

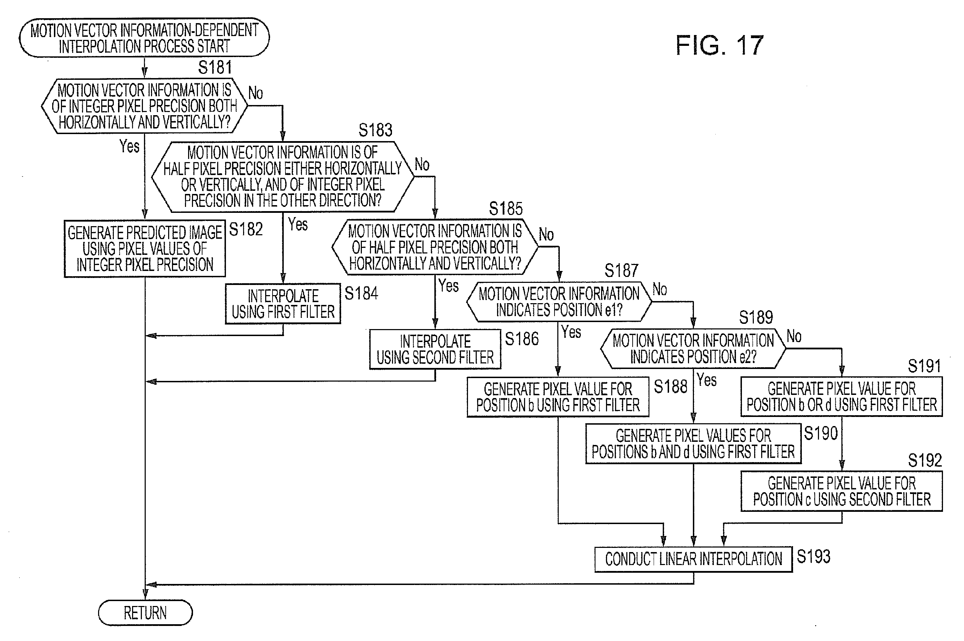

In a step S175, the motion prediction/compensation unit 122 and the interpolation filter switcher 123 conduct an interpolation process that is dependent on (sampling positions indicated by) motion vector information, and generate pixel values of a predicted image. Details of this interpolation process will be discussed more fully later with reference to Fig. 17.

As a result of the processing in step S175, an interpolation process dependent on the pixel precision of the motion vector information is conducted, and pixel values of a predicted image for a target block are generated. The predicted image thus generated is output to the switch 124.

Next, the motion vector information-dependent interpolation process in step S175 of Fig. 16 will be described with reference to the flowchart in Fig. 17. The example in Fig. 17 describes a case where the positions b to d and the positions e1 to e3 illustrated in Fig. 1 are given as sampling positions indicated by motion vector information. However, although illustration and description thereof is reduced or omitted, a similar process using the pixel values of relatively similar positions, etc. is conducted in cases of other positions.

The sampling position determination unit 141 reads out motion vector information from the motion vector buffer 131. In a step S181, the sampling position determination unit 141 determines whether or not the motion vector information is of integer pixel precision in both the horizontal direction and the vertical direction. In other words, in step S181, it is determined whether or not the motion vector information indicates a sampling position of integer pixel precision (the position A in Fig. 1, for example).

In the case where it is determined in step S181 that the motion vector information is of integer pixel precision in both the horizontal direction and the vertical direction, the sampling position determination unit 141 supplies information on the determined sampling position to the interpolation filter setting unit 142. In response, the interpolation filter setting unit 142 supplies the interpolation unit 132 with filter selection information which indicates that a filter is not to be used.

In a step S182, the interpolation unit 132 uses reference pixel values of integer pixel precision obtained from the frame memory 119 to generate a pixel value of a predicted image for the target block. The generated pixel value of a predicted image are supplied to the arithmetic unit 115 via the switch 124.

In the case where it is determined in step S181 that the motion vector information is not of integer pixel precision in both the horizontal direction and the vertical direction, the process proceeds to a step S183. In step S183, the sampling position determination unit 141 determines whether or not the motion vector information is of half pixel precision in either the horizontal direction or the vertical direction, and of integer pixel precision in the other direction. In other words, in step S183 it is determined whether or not the motion vector information indicates the position b or the position d in Fig. 1, for example.

In the case where it is determined in step S183 that the motion vector information is of half pixel precision in either the horizontal direction or the vertical direction and of integer pixel precision in the other direction, the sampling position determination unit 141 supplies information on that sampling position to the interpolation filter setting unit 142. In response, the interpolation filter setting unit 142 supplies the interpolation unit 132 with filter selection information indicating that the first filter is to be used.

In a step S184, the interpolation unit 132 conducts an interpolation process using the first filter. In other words, the interpolation unit 132 uses reference pixel values of integer pixel precision from the frame memory 119, motion vector information, and the first filter to conduct the interpolation process in Eq. (2) discussed earlier. In so doing, a pixel value of a predicted image for the target block (a pixel value corresponding to the position b or the position d in Fig. 1, for example) is generated, and the generated pixel value of a predicted image is supplied to the arithmetic unit 115 via the switch 124.

In the case where it is determined in step S183 that the motion vector information is not of half pixel precision in either the horizontal direction or the vertical direction and of integer pixel precision in the other direction, the process proceeds to a step S185. In step S185, the sampling position determination unit 141 determines whether or not the motion vector information is of half pixel precision in both the horizontal direction and the vertical direction. In other words, in step S185 it is determined whether or not the motion vector information indicates the position c in Fig. 1, for example.

In the case where it is determined in step S185 that the motion vector information is of half pixel precision in both the horizontal direction and the vertical direction, the sampling position determination unit 141 supplies information on that sampling position to the interpolation filter setting unit 142. In response, the interpolation filter setting unit 142 supplies the interpolation unit 132 with filter selection information indicating that the second filter is to be used.

In a step S186, the interpolation unit 132 conducts an interpolation process using the second filter. In other words, the interpolation unit 132 uses reference pixel values of integer pixel precision obtained from the frame memory 119, motion vector information, and the second filter to conduct processing expressed by Eq. (7) and generate an intermediate value B or an intermediate value D. Then, the interpolation unit 132 uses the intermediate value B or the intermediate value D to additionally perform the sum-of-products operation expressed in Eq. (8) discussed earlier. In so doing, a pixel value of a predicted image for the target block is generated (a pixel value corresponding to the position c in Fig. 1, for example), and the generated pixel value of a predicted image is supplied to the arithmetic unit 115 via the switch 124.

In the case where it is determined in step S185 that the motion vector information is not of half pixel precision in both the horizontal direction and the vertical direction, the process proceeds to a step S187. In step S187, the sampling position determination unit 141 determines whether or not the motion vector information indicates the position e1 in Fig. 1.

In the case where it is determined in step S187 that the motion vector information indicates the position e1 in Fig. 1, the sampling position determination unit 141 supplies information on that sampling position to the interpolation filter setting unit 142. In response, the interpolation filter setting unit 142 supplies the interpolation unit 132 with filter selection information indicating that the first filter is to be used.

In a step S188, the interpolation unit 132 generates a pixel value corresponding to the position b in Fig. 1 by means of an interpolation process using the first filter.
In other words, the interpolation unit 132 uses reference pixel values of integer pixel precision obtained from the frame memory 119, motion vector information, and the first filter to conduct the interpolation process of Eq. (2) discussed earlier, and generates a pixel value corresponding to the position b in Fig. 1.

Then, the interpolation unit 132 conducts linear interpolation in a step S193. In other words, the interpolation unit 132 uses a pixel value corresponding to the position b and a pixel value of integer pixel precision to conduct the linear interpolation expressed in the top row of Eq. (4) discussed earlier. In so doing, a pixel value of a predicted image for the target block (a pixel value corresponding to the position e1 in Fig. 1) is generated, and the generated pixel value of a predicted image is supplied to the arithmetic unit 115 via the switch 124.

In the case where it is determined in step S187 that the motion vector information does not indicate the position e1 in Fig. 1, the process proceeds to a step S189. In step S189, the sampling position determination unit 141 determines whether or not the motion vector information indicates the position e2 in Fig. 1.

In the case where it is determined in step S189 that the motion vector information indicates the position e2 in Fig. 1, the sampling position determination unit 141 supplies information on that sampling position to the interpolation filter setting unit 142. In response, the interpolation filter setting unit 142 supplies the interpolation unit 132 with filter selection information indicating that the first filter is to be used.

In a step S190, the interpolation unit 132 generates pixel values corresponding to the position b and the position d in Fig. 1 by means of an interpolation process using the first filter. In other words, the interpolation unit 132 uses reference pixel values of integer pixel precision obtained from the frame memory 119, motion vector information, and the first filter to conduct the interpolation process in Eq. (2) discussed earlier and generate pixel values corresponding to the position b and the position d in Fig. 1.

Then, the interpolation unit 132 conducts linear interpolation in step S193. In other words, the interpolation unit 132 uses pixel values corresponding to the position b and the position d to conduct the linear interpolation expressed in the middle row of Eq. (4) discussed earlier. In so doing, a pixel value of a predicted image for the target block (a pixel value corresponding to the position e2 in Fig. 1) is generated, and the generated pixel value of a predicted image is supplied to the arithmetic unit 115 via the switch 124.

In the case where it is determined in step s189 that the motion vector information does not indicate the position e2 in Fig. 1, the process proceeds to a step S191. In other words, in this case it is determined that the motion vector information indicates the position e3 in Fig. 1, and the sampling position determination unit 141 supplies information on that sampling position to the interpolation filter setting unit 142. In response, the interpolation filter setting unit 142 supplies the interpolation unit 132 with filter selection information indicating that the first filter is to be used for the position b or the position d, and filter selection information indicating that the second filter is to be used for the position c.

In step S191, the interpolation unit 132 generates a pixel value corresponding to the position b or the position d in Fig. 1 by means of an interpolation process using the first filter. In other words, the interpolation unit 132 uses reference pixel values of integer pixel precision obtained from the frame memory 119, motion vector information, and the first filter to conduct the interpolation process in Eq. (2) discussed earlier and generate a pixel value corresponding to the position b or the position d in Fig. 1.

Next, in a step S192, the interpolation unit 132 generates a pixel value corresponding to the position c in Fig. 1 by means of an interpolation process using the second filter. In other words, the interpolation unit 132 uses reference pixel values of integer pixel precision obtained from the frame memory 119, motion vector information, and the second filter to conducts the processing expressed in Eq. (7) and generate an intermediate value B or an intermediate value D. Then, the interpolation unit 132 uses the intermediate value B or the intermediate value D to additionally perform the sum-of-products operation expressed in Eq. (8) discussed earlier. In so doing, a pixel value of a predicted image for the target block (a pixel value corresponding to the position c in Fig. 1, for example) is generated.

Then, the interpolation unit 132 conducts linear interpolation in step S193. In other words, the interpolation unit 132 uses a pixel value corresponding to the position b or the position d and a pixel value corresponding to the position c to conduct the linear interpolation expressed in the bottom row of Eq. (4) discussed earlier. In so doing, a pixel value of a predicted image for the target block (a pixel value corresponding to the position e3 in Fig. 1, for example) is generated, and the generated pixel value of a predicted image is supplied to the arithmetic unit 115 via the switch 124.

As above, a filter to use for an interpolation process is set depending on the sampling position and the interpolation process is conducted using the set filter. For this reason, computation for the interpolation process (particularly for the position c and the position e3 in Fig. 1) can be reduced.

Meanwhile, although the foregoing description describes using an FIR filter {1,-5,20,20,-5,1} and an FIR filter {-1,5,5,-1} as FIR filters, the present invention is not limited to these filters only. In other words, similar advantages can be obtained by generating a pixel value for the position c using an FIR filter with fewer taps compared to the filter used for the position b and the position d.

Also, the filter coefficients are not limited to those predefined in the H.264/AVC format. For example, it may also be configured such that filter coefficients are adaptively computed according to individual frames, with those computed filter coefficients being used, as proposed in NPL 3.

In other words, as discussed above, the ordinary motion prediction process of the H.264/AVC format is conducted, motion vector values are computed for respective motion compensation blocks, and filter optimization is conducted so as to minimize motion residual error for the computed motion vector values. It may also be configured such that this optimization is conducted for at least one of a first filter and a second filter, which is then used.

Furthermore, although the foregoing description describes an example of switching between two types of filters, it may also be configured to switch among a plurality of two or more filters depending on the sampling position.

Additionally, the present invention may also be applied to the motion prediction/compensation process at 1/8 pixel precision proposed in NPL 4. In other words, in NPL 4, an interpolation process at half pixel precision is conducted with the filter [-3,12,-39,158,158,-39,12,-3]/256. Also, an interpolation process at quarter pixel precision is conducted with the filter [-3,12,-37,229,71,-21,6,-1]/256, and an interpolation process at 1/8 pixel precision is conducted with linear interpolation.

In that case, rather than linear interpolation, an FIR filter like the following is set with respect to a sampling position for which a pixel value is generated using an FIR filter. In other words, a different FIR filter is set for such a sampling position depending on whether it is of fractional pixel precision in either the horizontal direction or the vertical direction and of integer pixel precision in the other direction, or of fractional pixel precision in both the horizontal direction and the vertical direction. More specifically, filter coefficients with fewer taps are set for the latter, which is of fractional pixel precision in both directions, compared to the former, which is of fractional pixel precision in one direction.

In contrast, for a sampling position generated by linear interpolation, a different process is performed depending on whether the sampling positions of the pixel values given as input (or in other words, the sampling positions whose pixel values are used on the right side of Eq. (4)) belong to the former or belong to the latter.

In other words, a pixel value for a sampling position at half pixel precision and a pixel value for a sampling position at quarter pixel precision are generated using the set filter. Then, a pixel value for a sampling position at 1/8 pixel precision is generated by conducting linear interpolation using at least one of a pixel value of integer pixel precision, the generated pixel value for a sampling position at half pixel precision, and the generated pixel value for a sampling position at quarter pixel precision.

Meanwhile, in Fig. 4 an example taking the macroblock size to be 16 pixels by 16 pixels was described. However, it can hardly be said that taking the macroblock size to be 16 pixels by 16 pixels is optimal for large-sized images such as 4000 pixels by 2000 pixels like in UHD (Ultra High Definition), for example, which is targeted for next-generation coding formats.

Thus, in the literature "Video Coding Using Extended Block" (Study Group 16, Contribution 123, ITU, January 2009, hereinafter designated Standards Literature 1), etc., increasing the macroblock size to sizes such as 64×64 pixels and 32 pixels by 32 pixels is proposed.

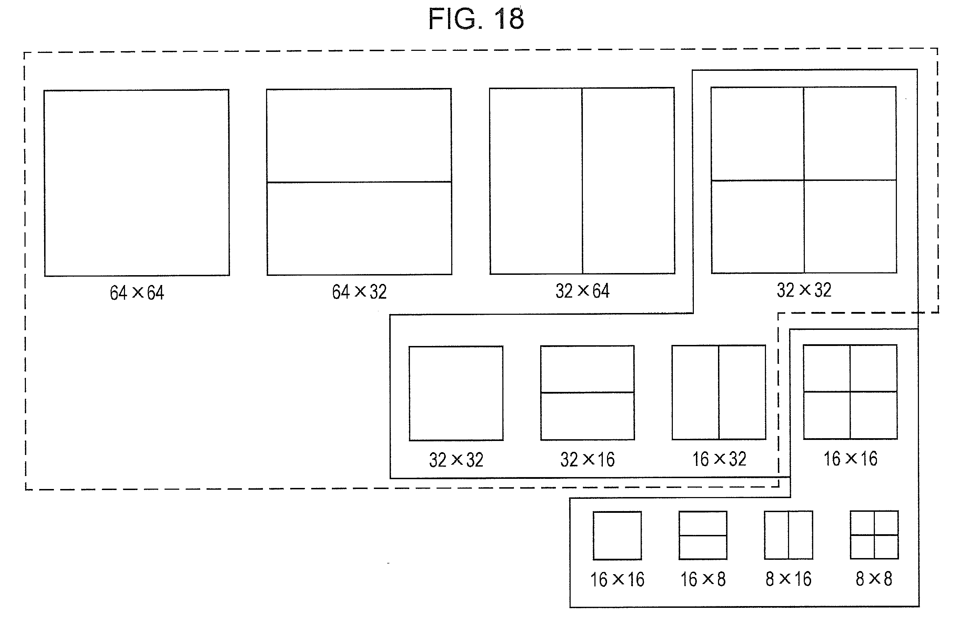

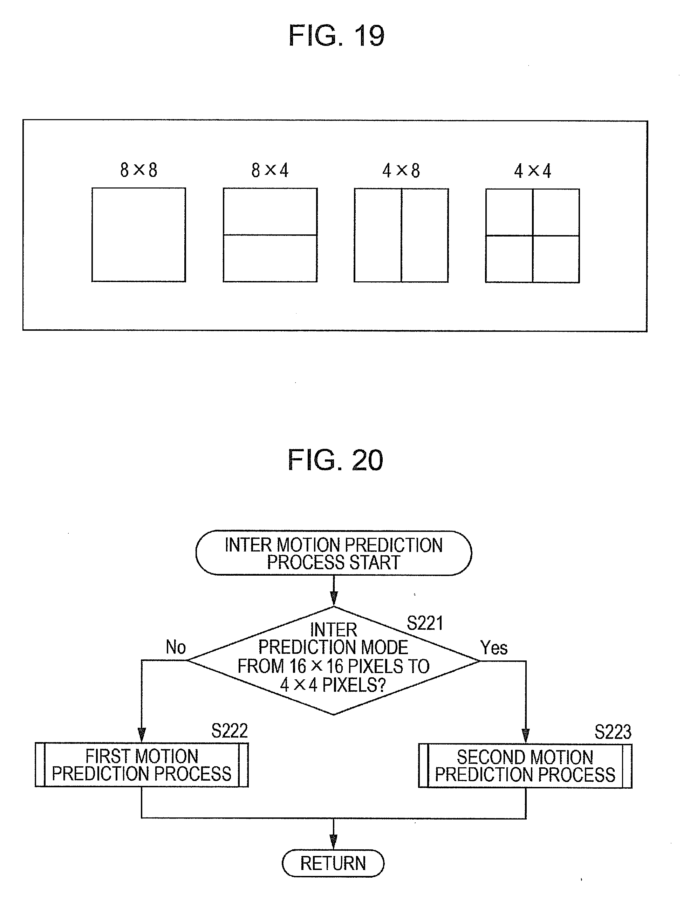

Figs. 18 and 19 are diagrams explaining an exemplary case of increasing the macroblock size. Similarly to Fig. 4, these drawings illustrate exemplary motion prediction/compensation block sizes in the H.264/AVC format, but they differ from the case of Fig. 4 in that 64×64 pixels is adopted as the macroblock size.

On the top row in Fig. 18, macroblocks composed of 64×64 pixels and divided into 64×64 pixel, 64×32 pixel, 32×64 pixel, and 32×32 pixel partitions are illustrated in order from the left. Also, on the middle row in Fig. 18, 32×32 pixel partitions divided into 32×32 pixel, 32×16 pixel, 16×32 pixel, and 16×16 pixel sub-partitions are illustrated in order from the left. Additionally, on the bottom row in Fig. 16, sub-partitions composed of 16×16 pixels and divided into 16×16 pixel, 16×8 pixel, 8×16 pixel, and 8×8 pixel sub-partitions are illustrated in order from the left.

Furthermore, in Fig. 19, 8×8 pixel sub-partitions divided into 8×8 pixel, 8×4 pixel, 4×8 pixel, and 4×4 pixel sub-partitions are illustrated in order from the left.

In other words, in the example in Figs. 18 and 19, the top row in Fig. 18 is taken to be a macroblock layer, the middle row in Fig. 18 is taken to be a first layer of sub-macroblocks, and the bottom row in Fig. 19 is taken to be a second layer of sub-macroblocks. Additionally, Fig. 19 is taken to be a third layer of sub-macroblocks.

In the case of configuring in this way, it is possible to divide a single macroblock into any of $64 \times 64$ pixel, $64 \times 32$ pixel, $32 \times 64$ pixel, or $32 \times 32$ partitions, with each having respectively independent motion vector information. Also, it is possible divide a $32 \times 32$ pixel partition into any of $32 \times 32$ pixel, $32 \times 16$ pixel, $16 \times 32$ pixel, and $16 \times 16$ pixel sub-partitions, with each having respectively independent motion vector information.

Furthermore, it is possible to divide a $16 \times 16$ sub-partition, with each sub-partition having respective independent motion vector information, and it is also possible to divide an $8 \times 8$ sub-partition, with each sub-partition having respective independent motion vector information.

In other words, in Standards Literature 1, by adopting a layered structure similar to the case of Fig. 4, larger blocks are defined as a superset while maintaining compatibility with H.264/AVC format with respect to the $16 \times 16$ pixel motion prediction/compensation block size. In Fig. 18, the portion enclosed by broken lines corresponds to that superset.

Herein, Standards Literature 1 is a proposal that applies extended macroblocks like those illustrated in Figs. 18 and 19 to inter slices. However, in the literature "Intra coding using extended block size" (VCEG-AL28, July 2009), it is proposed that extended macroblocks also be applied to intra slices.

The rationale for applying extended macroblocks in this way is that if encoding/decoding processes using conventional macroblock sizes are conducted on 4000 pixel by 2000 pixel images, for example, the amount of data to process becomes extremely large and the time required for processing increases. For example, portions of low frequency in an image, etc. can be more efficiently encoded/decoded by taking the motion prediction/compensation block size to be $64 \times 64$ pixels.

The example discussed above describes reducing computation that acts as a processing bottleneck when generating pixel values for the position c and the position e3 in Fig. 1, for example, by switching the filter depending on the sampling position to be interpolated. However, in the case where extended macroblocks are applied, uniformly switching the filter depending on the sampling position is thought to be inappropriate.

Stated differently, it is thought that the filter should be switched depending on the sampling position to be interpolated only in the case where the motion prediction/compensation block size is of the portion enclosed by broken lines in Fig. 18.

In other words, in the case where the motion prediction/compensation block size is taken to be from $64 \times 64$ pixels to $16 \times 32$ pixels, a superset of the current H.264/AVC format is adopted. In this case, switching the filter depending on the sampling position is not thought to pose a problem, since compatibility with the current H.264/AVC format is not guaranteed in the first place. On the other hand, in the case where the motion prediction/compensation block size is taken to be from $16 \times 16$ pixels to $4 \times 4$ pixels, there is compatibility with the current H.264/AVC format, and thus it is desirable for interpolation to be conducted similarly to the current H.264/AVC format.

Also, as discussed earlier, when encoding, a motion prediction/compensation block size is selected on the basis of cost function values. Consequently, in the case where the motion prediction/compensation block size is taken to be from $64 \times 64$ pixels to $16 \times 32$ pixels, the macroblock to be processed can be assumed to be, for example, a portion of low frequency in the image, etc. Consequently, for such portions, there is thought to be little to no risk of degraded motion prediction/compensation accuracy even if the filter is switched depending on the sampling position.

The image encoding apparatus 51 in Fig. 3 is still able to suitably compress images even in the case where extended macroblocks like those illustrated in Figs. 18 and 19 are applied, for example. Also, the image decoding apparatus 101 in Fig. 13 is still able to suitably decode images even in the case where extended macroblocks like those illustrated in Figs. 18 and 19 are applied, for example.

Next, an encoding process in the image encoding apparatus 51 in Fig. 3 will be described for the case where extended macroblocks are applied. In this case, processing is likewise executed in individual steps similarly to the processing discussed earlier with reference to the flowchart in Fig. 8. However, the details of the inter motion prediction process in step S32 in the prediction process illustrated in the flowchart in Fig. 9 differ from that illustrated in Fig. 11.

Fig. 20 is a flowchart explaining a detailed example of an inter motion prediction process executed as the processing in step S32 in Fig. 9 in the case where extended macroblocks are applied.

In a step S221, the motion prediction/compensation unit 75 determines whether or not the inter motion prediction process about to be executed is an inter motion prediction process in an inter prediction mode from $16 \times 16$ pixels to $4 \times 4$ pixels. In other words, it is determined whether or not the motion prediction/compensation block size is taken to be from $16 \times 16$ pixels to $4 \times 4$ pixels.

In the case where it is determined in step S221 that the inter motion prediction process is not in an inter prediction mode from $16 \times 16$ pixels to $4 \times 4$ pixels, the process proceeds to a step S222. In this case, the motion prediction/ compensation block size is from $64 \times 64$ pixels to $16 \times 32$ pixels.

In step S222, the motion prediction/compensation unit 75 executes a first motion prediction process.

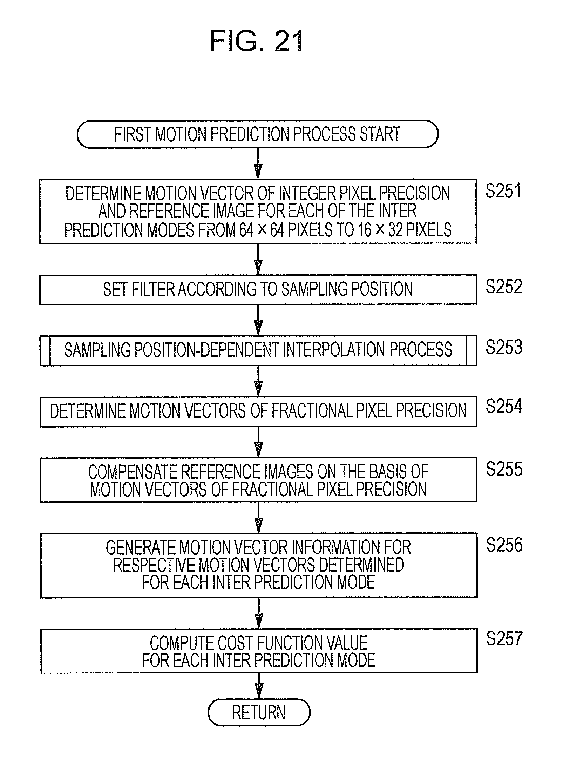

Fig. 21 is a flowchart explaining a detailed example of the first motion prediction process in step S222 of Fig. 20. The processing from step S251 to step S257 in Fig. 21 is respectively similar to the processing from steps S51 to S57 in Fig. 11. However, in step S251 of Fig. 1, motion vectors and reference images are determined for each inter prediction mode from 64×64 pixels to 16×32 pixels.

In other words, the first motion prediction process in Fig. 21 is very similar to the inter motion prediction process discussed earlier with reference to Fig. 11, and thus detailed description thereof is herein omitted.

Returning to Fig. 20, on the other hand, in the case where it is determined in step S221 that the inter motion prediction process is in an inter prediction mode from 16×16 pixels to 4×4 pixels, the process proceeds to a step S223.

In step S223, the motion prediction/compensation unit 75 executes a second motion prediction process.

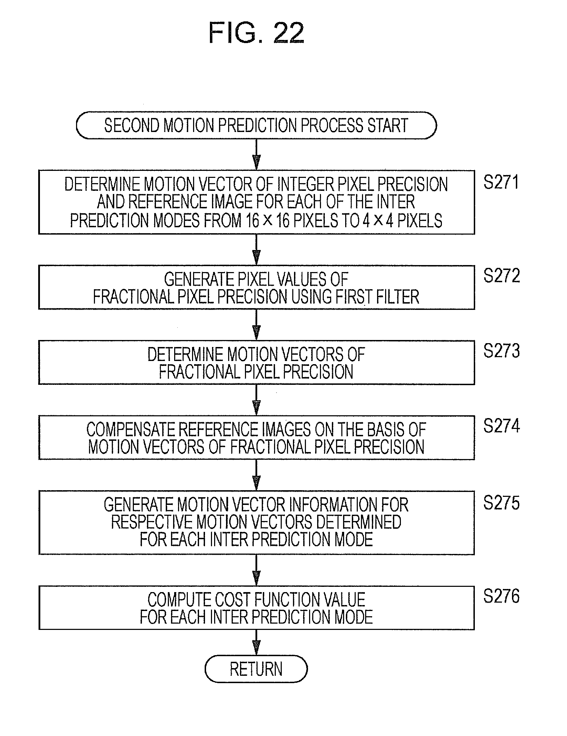

At this point, a detailed example of the second prediction process in step S223 of Fig. 20 will be described with reference to the flowchart in Fig. 22.

In a step S271, the integer pixel precision motion estimator 81 respectively determines motion vectors of integer pixel precision and reference images for each inter prediction mode from 16×16 pixels to 4×4 pixels.

In other words, the integer pixel precision motion estimator 81 is supplied with an image to be inter processed from the frame sort buffer 62 and reference pixel values of integer pixel precision from the frame memory 72. The integer pixel precision motion estimator 81 uses these images to compute, for each inter prediction mode, a reference image and a motion vector of integer pixel precision that minimizes the cost function value within a given search range of candidate reference images. In so doing, a motion vector of integer pixel precision and a reference images are respectively determined for a block to be processed in each inter prediction mode, with the motion vector information of integer pixel precision being supplied to the interpolation unit 82.

In a step S272, the interpolation unit 82 generates pixel values of fractional pixel precision using the first filter. Herein, in the case where the second prediction process is executed, the first filter is taken to have been set by the interpolation filter setting unit 92. In other words, the first filter is always used in the case where the motion prediction/compensation block size is from 16×16 pixels to 4×4 pixels.

As a result of the process in step S272, pixel values are generated for sampling positions of fractional pixel precision near pixels corresponding to motion vectors detected by the integer pixel precision motion estimator 81, and the generated reference pixel values of fractional pixel precision are supplied to the fractional pixel precision motion estimator 83.

In a step S273, the fractional pixel precision motion estimator 83 conducts motion estimation of a target block at fractional pixel precision in all inter prediction modes given as candidates, and determines motion vectors of fractional pixel precision.

In other words, the fractional pixel precision motion estimator 83 is supplied with an image to be inter processed from the frame sort buffer 62, motion vector information of integer pixel precision from the integer pixel precision motion estimator 81, and reference pixel values of fractional pixel precision from the interpolation unit 82.

The fractional pixel precision motion estimator 83 uses this information to compute the pixel (the pixel 6 in Fig. 2, for example) whose pixel value minimizes a cost function value such as SAD from among the pixels of half pixel precision near a pixel (the pixel E in Fig. 2, for example) corresponding to a motion vector of integer pixel precision. This pixel (the pixel 6 in Fig. 2, for example) is taken to be the pixel corresponding to the optimal motion vector of half pixel precision. Furthermore, the fractional pixel precision motion estimator 83 computes the pixel (the pixel b in Fig. 2, for example) whose pixel value minimizes a cost function value from among the pixels of quarter pixel precision near a pixel corresponding to the optimal motion vector of half pixel precision. In so doing, the motion vector corresponding to the computed pixel becomes the optimal motion vector of quarter pixel precision, and the optimal motion vector of quarter pixel precision is computed.

Motion vector information of fractional pixel precision determined by the fractional pixel precision motion estimator 83 is supplied to the motion compensation unit 84.

In a step S274, the motion compensation unit 84 compensates a reference image on the basis of the motion vectors of fractional pixel precision from the fractional pixel precision motion estimator 83.

In other words, the motion compensation unit 84 is supplied with reference pixel values of integer pixel precision from the frame memory 72, motion vector information of fractional pixel precision, as well as filter selection information from the interpolation filter setting unit 92. The motion compensation unit 84 uses this information to generate predicted images by interpolating pixel values of fractional pixel precision. The pixel values of the predicted images for all candidate blocks generated at this point are supplied to the mode determination unit 85 together with corresponding motion vector information, reference frame information, and inter prediction mode information, etc.

In a step S275, the mode determination unit 85 generates motion vector information $mvd_E$ for the respective motion vectors determined for each of the inter prediction modes from 16x16 pixels to 4x4 pixels.

The computed motion vector information is also used when computing cost function values in a following step S276, and in the case where the corresponding predicted image is ultimately selected by the predicted image selector 77, is output to the reversible encoder 66 together with prediction mode information and reference frame information, etc.

In step S276, the mode determination unit 85 computes the cost function value expressed in Eq. (9) or Eq. (10) discussed earlier for the respective inter prediction modes from 16x16 pixels to 4x4 pixels.

In other words, the mode determination unit 85 is supplied with predicted image pixel values, motion vector information, and reference frame information from the motion compensation unit 84, an image to be inter processed from the frame sort buffer 62, and reference frame information, etc. The mode determination unit 85 uses the supplied information and the motion vector information computed in step S275 as appropriate to compute a cost function value for all inter prediction modes given as candidates. The cost function values computed at this point are used when determining the optimal inter prediction mode in step S33 of Fig. 9 discussed earlier.

Herein, the processing from step S271 to step S276 discussed above is similar to the processing for prediction/compensation at quarter pixel precision in the conventional H.264/AVC format. In other words, in the second prediction process, the first filter is used regardless of sampling position. For example, the first filter is used even in the computation for obtaining a pixel value for the position c or a pixel value for the position e3 in Fig. 1.

In this way, an inter motion prediction process is executed in the case where extended macroblocks are applied.

Next, a decoding process in the image decoding apparatus 101 in Fig. 13 will be described for the case where extended macroblocks are applied. In this case, processing is likewise executed in individual steps similarly to the processing discussed earlier with reference to the flowchart in Fig. 15. However, the details of the motion vector information-dependent interpolation process in step S175 in the prediction process illustrated in the flowchart in Fig. 16 differ from that illustrated in Fig. 17.

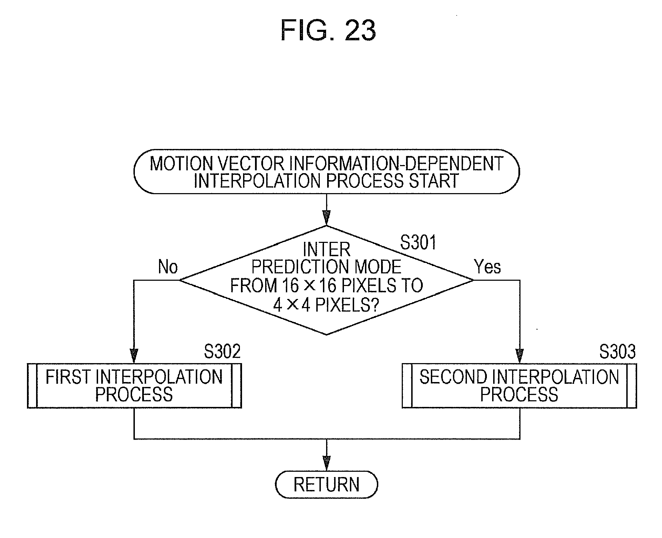

Fig. 23 is a flowchart explaining a detailed example of an motion vector information-dependent interpolation process executed as the processing in step S175 of Fig. 16 in the case where extended macroblocks are applied.

In step S301, the motion prediction/compensation unit 122 determines, on the basis of prediction mode information acquired in step S174, whether or not the prediction process about to be executed is in an inter prediction mode from 16x16 pixels to 4x4 pixels. In other words, it is determined whether or not the motion prediction/compensation block size is taken to be from 16x16 pixels to 4x4 pixels.

In the case where it is determined in step S301 that the prediction process is not in an inter prediction mode from 16x16 pixels to 4x4 pixels, the process proceeds to a step S302. In this case, the motion prediction/compensation block size is from 64x64 pixels to 16x32 pixels.

In a step S302, the motion prediction/compensation unit 122 and the interpolation filter switcher 123 execute a first interpolation process.

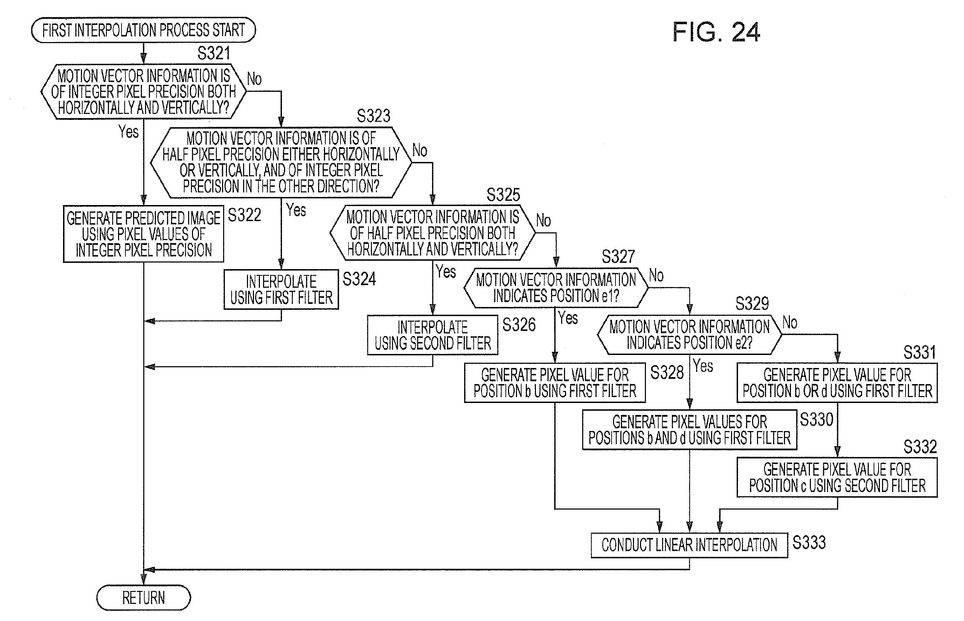

Fig. 24 is a flowchart explaining a detailed example of the first interpolation process in step S302 of Fig. 23. The processing from step S321 to step S333 in Fig. 24 is similar to the processing from step S181 to step S193 in Fig. 17.

In other words, the first interpolation process in Fig. 24 is similar to the motion vector information-dependent interpolation process discussed earlier with reference to Fig. 17, and thus detailed description thereof is herein omitted.

Returning to Fig. 23, on the other hand, in the case where it is determined in step S301 that the prediction process is in an inter prediction mode from 16x16 pixels to 4x4 pixels, the process proceeds to a step S303.

In step S303, the motion prediction/compensation unit 122 executes a second interpolation process.

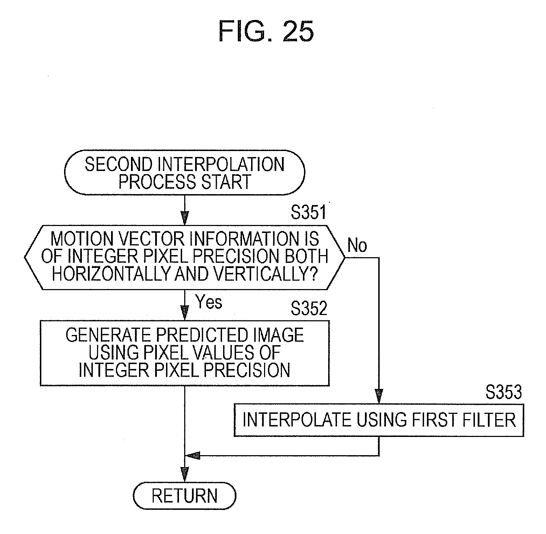

At this point, a detailed example of the second interpolation process in step S303 of Fig. 23 will be described with reference to the flowchart in Fig. 25.

In a step S351, the sampling position determination unit 141 reads out motion vector information from the motion vector buffer 131 and determines whether or not the motion vector information is of integer pixel precision in both the horizontal direction and the vertical direction. In other words, in step S351, it is determined whether or not the motion vector information indicates a sampling position of integer pixel precision (the position A in Fig. 1, for example).

In the case where it is determined in step S351 that the motion vector information is of integer pixel precision in both the horizontal direction and the vertical direction, the process proceeds to a step S352.

In step S352, the interpolation unit 132 uses reference pixel values of integer pixel precision obtained from the frame memory 119 to generate a pixel value of a predicted image for the target block. The generated pixel value of a predicted image is supplied to the arithmetic unit 115 via the switch 124.

In the case where it is determined in step S352 that the motion vector information is not of integer pixel precision in both the horizontal direction and the vertical direction, the process proceeds to a step S353.

In step S353, the interpolation unit 132 conducts an interpolation process using the first filter. In other words, the interpolation unit 132 uses reference pixel values of integer pixel precision obtained from the frame memory 119, motion vector information, and the first filter to conduct the interpolation process in Eq. (2) discussed earlier. The pixel value of a predicted image generated by interpolation is supplied to the arithmetic unit 115 via the switch 124.

Herein, in the case where the second interpolation process is executed, the first filter is taken to have been set by the interpolation filter setting unit 142. In other words, the first filter is always used in the case where the motion prediction/compensation block size is from 16x16 pixels to 4x4 pixels.

Herein, the processing from step S351 to step S353 discussed above is similar to the processing for prediction/compensation at quarter pixel precision in the conventional H.264/AVC format. In other words, in the second interpolation process, the first filter is used regardless of sampling position. For example, the first filter is used even in the computation for obtaining a pixel value for the position c or a pixel value for the position e3 in Fig. 1.

In this way, motion vector information-dependent interpolation process is executed in the case where extended macroblocks are applied.

Herein, in the examples discussed above with reference to Figs. 18 to 25, it is described that the first filter is always used in the case where the motion prediction/compensation block size is from 16x16 pixels to 4x4 pixels. However, it may also be configured such that the first filter is always used in the case where the motion prediction/compensation block size is from 8x8 pixels to 4x4 pixels, for example. In this way, a motion prediction/compensation block size can be arbitrarily set for determining whether to set a first filter or a second filter depending on the sampling position, or to always set the first filter regardless of the sampling position.

Furthermore, although it is configured herein such that it is determined whether or not to set a different filter depending on the sampling position as discussed above in the case where extended macroblocks are applied, it may also be configured such that it is determined whether or not to set a different filter depending on the sampling position as discussed above even in the case where extended macroblocks are not applied.

Also, in the foregoing, an example was described in which the macroblocks discussed earlier with reference to Figs. 18 and 19 are applied, but it may also be configured such that macroblocks extended even beyond those discussed earlier with reference to Figs. 18 and 19 are applied. For example, the macroblock size may be configured to a size such as 128x128 pixels.

Although it is configured such that the H.264/AVC format is used as the coding format in the foregoing, other encoding formats and decoding formats may also be used.

Furthermore, the present invention may be applied to an image encoding apparatus and an image decoding apparatus used when receiving image information (a bit stream), which has been compressed by an orthogonal transform such as the discrete cosine transform and motion compensation as in MPEG or H.26x, via a network medium such as satellite broadcasting, cable television, the Internet, or a mobile phone, for example. Also, the present invention may be applied to an image encoding apparatus and an image decoding apparatus used when processing information on storage media such as optical or magnetic disks and flash memory. Moreover, the present invention may also be applied to a motion prediction and compensation apparatus included in such image encoding apparatus and image decoding apparatus, etc.

The foregoing series of processes may be executed in hardware, and may also be executed in software. In the case of executing the series of processes in software, a program constituting such software is installed onto a computer. Herein, the term computer includes computers built into special-purpose hardware, and general-purpose personal computers able to execute various functions by installing various programs thereon.

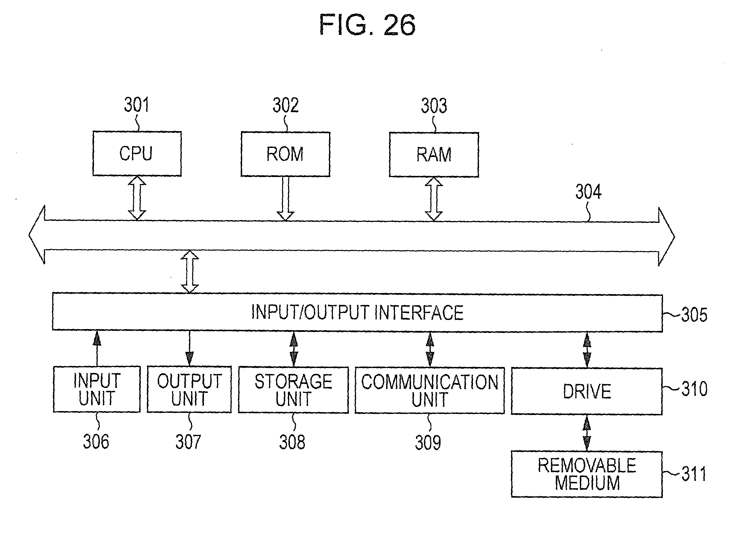

Fig. 26 is a block diagram illustrating an exemplary hardware configuration of a computer that executes the series of process discussed earlier by means of a program.

In the computer, a CPU (Central Processing Unit) 301, ROM (Read-Only Memory 302), and RAM (Random Access Memory) 303 are connected to each other by a bus 304.

An input/output interface 305 is additionally connected to the bus 304. An input unit 306, an output unit 307, a storage unit 308, a communication unit 309, and a drive 310 are connected to the input/output interface 305.

The input unit 306 comprises a keyboard, mouse, microphone, etc. The output unit 307 comprises a display, speakers, etc. The storage unit 308 comprises a hard disk, non-volatile memory, etc. The communication unit 309 comprises a network interface, etc. The drive 310 drives a removable medium 311 such as a magnetic disk, an optical disc, a magneto-optical disc, or semiconductor memory.

In a computer configured as above, the series of processes discussed earlier is conducted as a result of the CPU 301 loading a program stored in the storage unit 308 into the RAM 303 via the input/output interface 305 and the bus 304, and executing the program, for example.

The program executed by the computer (CPU 301) may be provided by being recorded onto a removable medium 311 given as packaged media, etc. Also, the program may be provided via a wired or wireless transmission medium such as a local area network, the Internet, or digital satellite broadcasting.

On the computer, the program may be installed to the storage unit 308 via the input/output interface 305 by loading the removable medium 311 into the drive 310. Also, the program may be received by the communication unit 309 via a wired or wireless transmission medium and installed to the storage unit 308. Otherwise, the program may be installed in advance to the ROM 302 or the storage unit 308.

Furthermore, the program executed by the computer may be a program whereby processes are conducted in a time series following the order described in this specification, and may also be a program whereby processes are conducted in parallel or at required timings, such as when called.

Embodiments of the present invention are not limited to the embodiments discussed above, and various modifications are possible within a scope that does not depart from the principal matter of the present invention.

Reference Signs List

| | | |
|---|---|---|
| 51 | image encoding apparatus |
| 66 | reversible encoder |
| 74 | intra prediction unit |
| 75 | motion prediction/compensation unit |
| 76 | interpolation filter switcher |
| 77 | predicted image selector |
| 81 | integer pixel precision motion estimator |
| 82 | interpolation unit |
| 83 | fractional pixel precision motion estimator |
| 84 | motion compensation unit |
| 85 | mode determination unit |
| 91 | sampling position determination unit |
| 92 | interpolation filter setting unit |
| 101 | image decoding apparatus |
| 112 | reversible decoder |
| 121 | intra prediction unit |
| 122 | motion prediction/compensation unit |
| 123 | interpolation filter switcher |
| 124 | switch |
| 131 | motion vector buffer |
| 132 | interpolation unit |
| 141 | sampling position determination unit |
| 142 | interpolation filter setting unit |

**Claims**

**1.** An image processing apparatus comprising:

motion estimating means for computing a motion vector for a target block to be encoded;
filter setting means for setting filter coefficients with different numbers of taps depending on a sampling position of fractional pixel precision corresponding to the motion vector computed by the motion estimating means; and
interpolating means for generating a pixel value for the sampling position using the filter coefficients set by the filter setting means.

**2.** The imaging processing apparatus according to Claim 1, wherein
the filter setting means respectively sets the filter coefficients with different numbers of taps for a first sampling position that is of fractional pixel precision in either the horizontal direction or the vertical direction and of integer pixel precision in the other direction, versus a second sampling position that is of fractional pixel precision in both directions.

**3.** The image processing apparatus according to Claim 2, wherein
the filter setting means sets the filter coefficients with fewer taps for the second sampling position compared to the first sampling position.

**4.** The image processing apparatus according to Claim 3, wherein
the filter setting means sets
{1,-5,20,20,-5,1}
predefined by a coding standard as the filter coefficients for the first sampling position.

**5.** The image processing apparatus according to Claim 3, wherein
the filter setting means sets
{-1,5,5-1}
as the filter coefficients for the second sampling position.

6. The image processing apparatus according to Claim 1, wherein
the interpolating means generates a pixel value for a sampling position at half pixel precision using the filter coefficients set by the filter setting means, and generates a pixel value for a sampling position at quarter pixel precision by conducting linear interpolation using at least one of a pixel value of integer pixel precision and the generated pixel value for the sampling position at half pixel precision.

7. The image processing apparatus according to Claim 1, wherein
the interpolating means generates a pixel value for a sampling position at half pixel precision and a pixel value for a sampling position at quarter pixel precision using the filter coefficients set by the filter setting means, and generates a pixel for a sampling position at 1/8 pixel precision by conducting linear interpolation using at least one of a pixel value of integer pixel precision, the generated pixel value for the sampling position at half pixel precision, and the generated pixel value for the sampling position at quarter pixel precision.

8. The image processing apparatus according to Claim 1, wherein
values predefined by a coding standard are used as the filter coefficients.

9. The image processing apparatus according to Claim 1, wherein
optimal values computed for each frame are used as the filter coefficients.

10. The image processing apparatus according to Claim 1, wherein
in the case where the motion prediction/compensation block size used to compute the motion vector is a block size belonging to a first type, the filter setting means always sets first filter coefficients, and
in the case where the motion prediction/compensation block size used to compute the motion vector is a block size belonging to a second type, the filter setting means sets the first filter coefficients for a first sampling position that is of fractional pixel precision in either the horizontal direction or the vertical direction and of integer pixel precision in the other direction, while also setting second filter coefficients with fewer taps compared to the first sampling position for a second sampling position that is of fractional pixel precision in both directions.

11. An image processing method, including steps wherein an image processing apparatus
computes a motion vector for a target block to be encoded,
sets filter coefficients with different numbers of taps depending on a sampling position of fractional pixel precision corresponding to the motion vector computed by the motion estimating means, and
generates a pixel value for the sampling position using the set filter coefficients.

12. An image processing apparatus comprising:

decoding means for decoding motion vector information for a target block to be decoded;
filter setting means for setting filter coefficients with different numbers of taps depending on a sampling position of fractional pixel precision corresponding to the motion vector information for the target block that was decoded by the decoding means; and
interpolating means for generating a pixel value for the sampling position using the filter coefficients set by the filter setting means.

13. The imaging processing apparatus according to Claim 12, wherein
the filter setting means respectively sets the filter coefficients with different numbers of taps for a first sampling position that is of fractional pixel precision in either the horizontal direction or the vertical direction and of integer pixel precision in the other direction, versus a second sampling position that is of fractional pixel precision in both directions.

14. The image processing apparatus according to Claim 13, wherein
the filter setting means sets the filter coefficients with fewer taps for the second sampling position compared to the first sampling position.

15. The image processing apparatus according to Claim 14, wherein
the filter setting means sets
{1,-5,20,20,-5,1}
predefined by a coding standard as the filter coefficients for the first sampling position.

**16.** The image processing apparatus according to Claim 14, wherein
the filter setting means sets
{-1,5,5-1}
as the filter coefficients for the second sampling position.

**17.** The image processing apparatus according to Claim 12, wherein
the interpolating means generates a pixel value for a sampling position at half pixel precision using the filter coefficients set by the filter setting means, and generates a pixel value for a sampling position at quarter pixel precision by conducting linear interpolation using at least one of a pixel value of integer pixel precision and the generated pixel value for the sampling position at half pixel precision.

**18.** The image processing apparatus according to Claim 12, wherein
the interpolating means generates a pixel value for a sampling position at half pixel precision and a pixel value for a sampling position at quarter pixel precision using the filter coefficients set by the filter setting means, and generates a pixel for a sampling position at 1/8 pixel precision by conducting linear interpolation using at least one of a pixel value of integer pixel precision, the generated pixel value for the sampling position at half pixel precision, and the generated pixel value for the sampling position at quarter pixel precision.

**19.** The image processing apparatus according to Claim 12, wherein
values predefined by a coding standard are used as the filter coefficients.

**20.** The image processing apparatus according to Claim 12, wherein
optimal values computed for each frame are used as the filter coefficients.

**21.** The image processing apparatus according to Claim 12, wherein
the filter setting means specifies a motion prediction/compensation block size to be used to compute the motion vector on the basis of the motion vector information,
in the case where the block size belongs to a first type, the filter setting means always sets first filter coefficients, and
in the case where the block size belongs to a second type, the filter setting means sets the first filter coefficients for a first sampling position that is of fractional pixel precision in either the horizontal direction or the vertical direction and of integer pixel precision in the other direction, while also setting second filter coefficients with fewer taps compared to the first sampling position for a second sampling position that is of fractional pixel precision in both directions.

**22.** An image processing method, including steps wherein an image processing apparatus
decodes motion vector information for a target block to be decoded,
sets filter coefficients with different numbers of taps depending on a sampling position of fractional pixel precision corresponding to the decoded motion vector information for the target block, and
generates a pixel value for the sampling position using the set filter coefficients.

**Amended claims under Art. 19.1 PCT**

**1.** amended) An image processing apparatus comprising:

motion estimating means for computing a motion vector for a target block to be encoded;
filter setting means that, in the case where the motion prediction/compensation block used to compute the motion vector is an extended macroblock, sets first filter coefficients for a first sampling position that is of fractional pixel precision in either the horizontal direction or the vertical direction of the motion vector and of integer pixel precision in the other direction, while also setting second filter coefficients with fewer taps compared to the first sampling position for a second sampling position that is of fractional pixel precision in both directions; and
interpolating means for generating a pixel value for the sampling position using the filter coefficients set by the filter setting means.

**2.** deleted)

**3.** deleted)

**4.** amended) The image processing apparatus according to Claim 1, wherein
the filter setting means sets
{1,-5,20,20,-5,1}
predefined by a coding standard as the filter coefficients for the first sampling position.

**5.** amended) The image processing apparatus according to Claim 1, wherein
the filter setting means sets
{1-1,5,5-1}
as the filter coefficients for the second sampling position.

**6.** The image processing apparatus according to Claim 1, wherein
the interpolating means generates a pixel value for a sampling position at half pixel precision using the filter coefficients set by the filter setting means, and generates a pixel value for a sampling position at quarter pixel precision by conducting linear interpolation using at least one of a pixel value of integer pixel precision and the generated pixel value for the sampling position at half pixel precision.

**7.** The image processing apparatus according to Claim 1, wherein
the interpolating means generates a pixel value for a sampling position at half pixel precision and a pixel value for a sampling position at quarter pixel precision using the filter coefficients set by the filter setting means, and generates a pixel for a sampling position at 1/8 pixel precision by conducting linear interpolation using at least one of a pixel value of integer pixel precision, the generated pixel value for the sampling position at half pixel precision, and the generated pixel value for the sampling position at quarter pixel precision.

**8.** The image processing apparatus according to Claim 1, wherein
values predefined by a coding standard are used as the filter coefficients.

**9.** The image processing apparatus according to Claim 1, wherein
optimal values computed for each frame are used as the filter coefficients.

**10.** deleted)

**11.** amended) An image processing method, including steps wherein an image processing apparatus
computes a motion vector for a target block to be encoded,
in the case where the motion prediction/compensation block used to compute the motion vector is an extended macroblock, sets first filter coefficients for a first sampling position that is of fractional pixel precision in either the horizontal direction or the vertical direction of the motion vector and of integer pixel precision in the other direction, while also setting second filter coefficients with fewer taps compared to the first sampling position for a second sampling position that is of fractional pixel precision in both directions, and
generates a pixel value for the sampling position using the set filter coefficients.

**12.** amended) An image processing apparatus comprising:

decoding means for decoding motion vector information for a target block to be decoded;
filter setting means for specifying a motion prediction/compensation block to be used to compute the motion vector according to the motion vector information, and
in the case where the block is an extended block, the filter setting means sets first filter coefficients for a first sampling position that is of fractional pixel precision in either the horizontal direction or the vertical direction of the motion vector and of integer pixel precision in the other direction, while also setting second filter coefficients with fewer taps compared to the first sampling position for a second sampling position that is of fractional pixel precision in both directions; and
interpolating means for generating a pixel value for the sampling position using the filter coefficients set by the filter setting means.

**13.** deleted)

**14.** deleted)

**15.** amended) The image processing apparatus according to Claim 12, wherein

the filter setting means sets
{1,-5,20,20,-5,1}
predefined by a coding standard as the filter coefficients for the first sampling position.

**16.** amended) The image processing apparatus according to Claim 12, wherein
the filter setting means sets
{-1,5,5-1}
as the filter coefficients for the second sampling position.

**17.** The image processing apparatus according to Claim 12, wherein
the interpolating means generates a pixel value for a sampling position at half pixel precision using the filter coefficients-set by the filter setting means, and generates a pixel value for a sampling position at quarter pixel precision by conducting linear interpolation using at least one of a pixel value of integer pixel precision and the generated pixel value for the sampling position at half pixel precision.

**18.** The image processing apparatus according to Claim 12, wherein
the interpolating means generates a pixel value for a sampling position at half pixel precision and a pixel value for a sampling position at quarter pixel precision using the filter coefficients set by the filter setting means, and generates a pixel, for a sampling position at 1/8 pixel precision by conducting linear interpolation using at least one of a pixel value of integer pixel precision, the generated pixel value for the sampling position at half pixel precision, and the generated pixel value for the sampling position at quarter pixel precision.

**19.** The image processing apparatus according to Claim 12, wherein
values predefined by a coding standard are used as the filter coefficients.

**20.** The image processing apparatus according to Claim 12, wherein
optimal values computed for each frame are used as the filter coefficients.

**21.** deleted)

**22.** amended) An image processing method, including steps wherein an image processing apparatus
decodes motion vector information for a target block to be decoded,
specifies a motion prediction/compensation block to be used to compute the motion vector according to the motion vector information, where
in the case where the block is an extended block, sets first filter coefficients for a first sampling position that is of fractional pixel precision in either the horizontal direction or the vertical direction of the motion vector and of integer pixel precision in the other direction, while also setting second filter coefficients with fewer taps compared to the first sampling position for a second sampling position that is of fractional pixel precision in both directions, and generates a pixel value for the sampling position using the set filter coefficients.

**23.** added) A program causing a computer to function as an image processing apparatus comprising:

decoding means for decoding motion vector information for a target block to be decoded;
filter setting means for specifying a motion prediction/compensation block to be used to compute the motion vector according to the motion vector information, where
in the case where the block is an extended block, the filter setting means sets first filter coefficients for a first sampling position that is of fractional pixel precision in either the horizontal direction or the vertical direction of the motion vector and of integer pixel precision in the other direction, while also setting second filter coefficients with fewer taps compared to the first sampling position for a second sampling position that is of fractional pixel precision in both directions; and
interpolating means for generating a pixel value for the sampling position using the filter coefficients set by the filter setting means.

# FIG. 1

| A | e1 | b | | A |
|---|----|---|---|---|
| | e2 | e3 | | |
| d | | c | | d |
| | | | | |
| A | | b | | A |

# FIG. 2

| A | | | | B | | | | C |
|---|---|---|---|---|---|---|---|---|
| | | | | | | | | |
| | | 1 | | 2 | | 3 | | |
| | | | | | | | | |
| D | | 4 | | E | | 5 | | F |
| | a | b | c | | | | | |
| | d | 6 | e | 7 | | 8 | | |
| | f | g | h | | | | | |
| G | | | | H | | | | I |

# FIG. 3

EP 2 442 569 A1

FIG. 4

MACROBLOCK TYPES

16 × 16     16 × 8     8 × 16     8 × 8

SUB-MACROBLOCK TYPES

8 × 8     8 × 4     4 × 8     4 × 4

FIG. 5

EP 2 442 569 A1

FIG. 6

FIG. 7

# FIG. 8

```
                    ( ENCODING PROCESS START )
                                │
                                ▼
        ┌───────────────────────────────────────┐  S11
        │              A/D CONVERT               │
        └───────────────────────────────────────┘
                                │
                                ▼
        ┌───────────────────────────────────────┐  S12
        │                 SORT                   │
        └───────────────────────────────────────┘
                                │
                                ▼
        ┌───────────────────────────────────────┐  S13
        │      CALCULATE DIFFERENCE BETWEEN      │
        │       IMAGE AND PREDICTED IMAGE        │
        └───────────────────────────────────────┘
                                │
                                ▼
        ┌───────────────────────────────────────┐  S14
        │        APPLY ORTHOGONAL TRANSFORM      │
        └───────────────────────────────────────┘
                                │
                                ▼
        ┌───────────────────────────────────────┐  S15
        │                QUANTIZE                │
        └───────────────────────────────────────┘
                                │
                                ▼
        ┌───────────────────────────────────────┐  S16
        │               DEQUANTIZE               │
        └───────────────────────────────────────┘
                                │
                                ▼
        ┌───────────────────────────────────────┐  S17
        │    APPLY INVERSE ORTHOGONAL TRANSFORM  │
        └───────────────────────────────────────┘
                                │
                                ▼
        ┌───────────────────────────────────────┐  S18
        │           ADD TO PREDICTED IMAGE       │
        └───────────────────────────────────────┘
                                │
                                ▼
        ┌───────────────────────────────────────┐  S19
        │                 FILTER                 │
        └───────────────────────────────────────┘
                                │
                                ▼
        ┌───────────────────────────────────────┐  S20
        │                 STORE                  │
        └───────────────────────────────────────┘
                                │
                                ▼
        ┌┃─────────────────────────────────────┃┐  S21
        │┃          PREDICTION PROCESS          ┃│
        └┃─────────────────────────────────────┃┘
                                │
                                ▼
        ┌───────────────────────────────────────┐  S22
        │          SELECTED PREDICTED IMAGE      │
        └───────────────────────────────────────┘
                                │
                                ▼
        ┌───────────────────────────────────────┐  S23
        │                ENCODE                  │
        └───────────────────────────────────────┘
                                │
                                ▼
        ┌───────────────────────────────────────┐  S24
        │              ACCUMULATE                │
        └───────────────────────────────────────┘
                                │
                                ▼
        ┌───────────────────────────────────────┐  S25
        │             CONTROL RATE               │
        └───────────────────────────────────────┘
                                │
                                ▼
                          (    END    )
```

# FIG. 9

```
      ( PREDICTION PROCESS START )
                  │
                  ▼
┌─────────────────────────────────────────┐
│         INTRA PREDICTION PROCESS         │  S31
└─────────────────────────────────────────┘
                  │
                  ▼
┌─────────────────────────────────────────┐
│      INTER MOTION PREDICTION PROCESS     │  S32
└─────────────────────────────────────────┘
                  │
                  ▼
┌─────────────────────────────────────────┐
│  DETERMINE OPTIMAL INTER PREDICTION MODE │  S33
└─────────────────────────────────────────┘
                  │
                  ▼
            (    RETURN    )
```

# FIG. 10

```
        ( INTRA PREDICTION PROCESS START )
                        │
                        ▼
    ┌─────────────────────────────────────────┐
    │            INTRA PREDICT FOR EACH OF      │   S41
    │        THE 4 × 4 PIXEL, 8 × 8 PIXEL, AND  │
    │    16 × 16 PIXEL INTRA PREDICTION MODES   │
    └─────────────────────────────────────────┘
                        │
                        ▼
    ┌─────────────────────────────────────────┐
    │        COMPUTE COST FUNCTION VALUE        │   S42
    │        FOR EACH INTRA PREDICTION MODE     │
    └─────────────────────────────────────────┘
                        │
                        ▼
    ┌─────────────────────────────────────────┐
    │  RESPECTIVELY DETERMINE OPTIMAL MODE      │   S43
    │      FOR EACH INTRA PREDICTION MODE       │
    └─────────────────────────────────────────┘
                        │
                        ▼
    ┌─────────────────────────────────────────┐
    │   SELECT OPTIMAL INTRA PREDICTION MODE    │   S44
    │   FROM AMONG RESPECTIVE OPTIMAL MODES     │
    │ DETERMINED FOR EACH INTRA PREDICTION MODE │
    └─────────────────────────────────────────┘
                        │
                        ▼
                  (   RETURN   )
```

40

# FIG. 11

INTER MOTION PREDICTION PROCESS START

DETERMINE MOTION VECTOR OF INTEGER PIXEL PRECISION AND REFERENCE IMAGE FOR EACH OF THE INTER PREDICTION MODES FROM 16 × 16 PIXELS TO 4 × 4 PIXELS   S51

SET FILTER ACCORDING TO SAMPLING POSITION   S52

SAMPLING POSITION-DEPENDENT INTERPOLATION PROCESS   S53

DETERMINE MOTION VECTORS OF FRACTIONAL PIXEL PRECISION   S54

COMPENSATE REFERENCE IMAGES ON THE BASIS OF MOTION VECTORS OF FRACTIONAL PIXEL PRECISION   S55

GENERATE MOTION VECTOR INFORMATION FOR RESPECTIVE MOTION VECTORS DETERMINED FOR EACH INTER PREDICTION MODE   S56

COMPUTE COST FUNCTION VALUE FOR EACH INTER PREDICTION MODE   S57

RETURN

# FIG. 12

```
   ┌──────────────────────────────────────┐
   │   SAMPLING POSITION-DEPENDENT        │
   │   INTERPOLATION PROCESS START        │
   └──────────────────────────────────────┘
                    │
                    ▼
┌────────────────────────────────────────────┐  S71
│  GENERATE PIXEL VALUES CORRESPONDING TO     │
│  POSITIONS b AND d USING FIRST FILTER       │
└────────────────────────────────────────────┘
                    │
                    ▼
┌────────────────────────────────────────────┐  S72
│  GENERATE VALUES FOR INTERMEDIATE           │
│  VALUES B AND D USING SECOND FILTER         │
└────────────────────────────────────────────┘
                    │
                    ▼
┌────────────────────────────────────────────┐  S73
│  GENERATE PIXEL VALUE CORRESPONDING TO      │
│  POSITION c USING SECOND FILTER             │
└────────────────────────────────────────────┘
                    │
                    ▼
┌────────────────────────────────────────────┐  S74
│  GENERATE PIXEL VALUES CORRESPONDING TO     │
│  POSITIONS e1 TO e3 BY LINEAR INTERPOLATION │
└────────────────────────────────────────────┘
                    │
                    ▼
              ┌──────────┐
              │  RETURN  │
              └──────────┘
```

# FIG. 13

EP 2 442 569 A1

# FIG. 14

EP 2 442 569 A1

# FIG. 15

DECODING PROCESS START

ACCUMULATE IMAGE — S131

DECODE — S132

DEQUANTIZE — S133

APPLY INVERSE ORTHOGONAL TRANSFORM — S134

ADD TO PREDICTED IMAGE — S135

FILTER — S136

STORE — S137

PREDICTION PROCESS — S138

SELECT PREDICTION IMAGE — S139

SORT — S140

D/A CONVERT — S141

END

# FIG. 16

```
        ( PREDICTION PROCESS START )
                     │
                     ▼        S171
              ┌──────────────┐    No
              < INTRA CODED? >─────────────────────┐
              └──────────────┘                     │
                     │ Yes    S172                  ▼            S174
        ┌────────────────────────┐      ┌────────────────────────┐
        │      ACQUIRE INTRA      │      │        ACQUIRE          │
        │    PREDICTION MODE      │      │    PREDICTION MODE      │
        │      INFORMATION        │      │    INFORMATION ETC.     │
        └────────────────────────┘      └────────────────────────┘
                     │        S173                  │            S175
        ┌────────────────────────┐      ┌────────────────────────┐
        │     INTRA PREDICT       │      │     MOTION VECTOR       │
        │                         │      │ INFORMATION-DEPENDENT   │
        └────────────────────────┘      │  INTERPOLATION PROCESS  │
                     │                   └────────────────────────┘
                     │◄───────────────────────────┘
                     ▼
              ( RETURN )
```

FIG. 17

MOTION VECTOR INFORMATION-DEPENDENT
INTERPOLATION PROCESS START

S181
MOTION VECTOR INFORMATION IS OF INTEGER PIXEL PRECISION BOTH HORIZONTALLY AND VERTICALLY? — No

Yes

S183
MOTION VECTOR INFORMATION IS OF HALF PIXEL PRECISION EITHER HORIZONTALLY OR VERTICALLY, AND OF INTEGER PIXEL PRECISION IN THE OTHER DIRECTION? — No

GENERATE PREDICTED IMAGE USING PIXEL VALUES OF INTEGER PIXEL PRECISION  S182

Yes
INTERPOLATE USING FIRST FILTER  S184

S185
MOTION VECTOR INFORMATION IS OF HALF PIXEL PRECISION BOTH HORIZONTALLY AND VERTICALLY? — No

Yes
INTERPOLATE USING SECOND FILTER  S186

S187
MOTION VECTOR INFORMATION INDICATES POSITION e1? — No

Yes
GENERATE PIXEL VALUE FOR POSITION b USING FIRST FILTER  S188

S189
MOTION VECTOR INFORMATION INDICATES POSITION e2? — No

Yes
GENERATE PIXEL VALUES FOR POSITIONS b AND d USING FIRST FILTER  S190

S191
GENERATE PIXEL VALUE FOR POSITION b OR d USING FIRST FILTER

S192
GENERATE PIXEL VALUE FOR POSITION c USING SECOND FILTER

CONDUCT LINEAR INTERPOLATION  S193

RETURN

EP 2 442 569 A1

FIG. 18

64 × 64          64 × 32          32 × 64          32 × 32

32 × 32          32 × 16          16 × 32          16 × 16

16 × 16          16 × 8          8 × 16          8 × 8

EP 2 442 569 A1

# FIG. 19

8 × 8　　　　　8 × 4　　　　　4 × 8　　　　　4 × 4

# FIG. 20

INTER MOTION PREDICTION
PROCESS START

INTER
PREDICTION MODE
FROM 16 × 16 PIXELS TO
4 × 4 PIXELS?　　　S221

No　　　　　　　　　　　　　　　　　　　　Yes

FIRST MOTION
PREDICTION PROCESS　　　S222

SECOND MOTION
PREDICTION PROCESS　　　S223

RETURN

# FIG. 21

```
( FIRST MOTION PREDICTION PROCESS START )
                    │
                    ▼
┌─────────────────────────────────────────────────────┐
│  DETERMINE MOTION VECTOR OF INTEGER PIXEL PRECISION   │ S251
│      AND REFERENCE IMAGE FOR EACH OF THE INTER        │
│ PREDICTION MODES FROM 64 × 64 PIXELS TO 16 × 32 PIXELS│
└─────────────────────────────────────────────────────┘
                    │
                    ▼
┌─────────────────────────────────────────────────────┐
│         SET FILTER ACCORDING TO SAMPLING POSITION     │ S252
└─────────────────────────────────────────────────────┘
                    │
                    ▼
┌─────────────────────────────────────────────────────┐
││  SAMPLING POSITION-DEPENDENT INTERPOLATION PROCESS  ││ S253
└─────────────────────────────────────────────────────┘
                    │
                    ▼
┌─────────────────────────────────────────────────────┐
│ DETERMINE MOTION VECTORS OF FRACTIONAL PIXEL PRECISION│ S254
└─────────────────────────────────────────────────────┘
                    │
                    ▼
┌─────────────────────────────────────────────────────┐
│      COMPENSATE REFERENCE IMAGES ON THE BASIS OF      │ S255
│    MOTION VECTORS OF FRACTIONAL PIXEL PRECISION       │
└─────────────────────────────────────────────────────┘
                    │
                    ▼
┌─────────────────────────────────────────────────────┐
│       GENERATE MOTION VECTOR INFORMATION FOR          │ S256
│      RESPECTIVE MOTION VECTORS DETERMINED             │
│         FOR EACH INTER PREDICTION MODE                │
└─────────────────────────────────────────────────────┘
                    │
                    ▼
┌─────────────────────────────────────────────────────┐
│            COMPUTE COST FUNCTION VALUE                │ S257
│         FOR EACH INTER PREDICTION MODE                │
└─────────────────────────────────────────────────────┘
                    │
                    ▼
              ( RETURN )
```

# FIG. 22

```
( SECOND MOTION PREDICTION PROCESS START )
                        │
                        ▼
┌──────────────────────────────────────────────────────────┐
│ DETERMINE MOTION VECTOR OF INTEGER PIXEL PRECISION         │  S271
│ AND REFERENCE IMAGE FOR EACH OF THE INTER                  │
│ PREDICTION MODES FROM 16 X 16 PIXELS TO 4 X 4 PIXELS       │
└──────────────────────────────────────────────────────────┘
                        │
                        ▼
┌──────────────────────────────────────────────────────────┐
│ GENERATE PIXEL VALUES OF                                    │  S272
│ FRACTIONAL PIXEL PRECISION USING FIRST FILTER              │
└──────────────────────────────────────────────────────────┘
                        │
                        ▼
┌──────────────────────────────────────────────────────────┐
│ DETERMINE MOTION VECTORS OF                                 │  S273
│ FRACTIONAL PIXEL PRECISION                                  │
└──────────────────────────────────────────────────────────┘
                        │
                        ▼
┌──────────────────────────────────────────────────────────┐
│ COMPENSATE REFERENCE IMAGES ON THE BASIS OF               │  S274
│ MOTION VECTORS OF FRACTIONAL PIXEL PRECISION              │
└──────────────────────────────────────────────────────────┘
                        │
                        ▼
┌──────────────────────────────────────────────────────────┐
│ GENERATE MOTION VECTOR INFORMATION FOR                     │  S275
│ RESPECTIVE MOTION VECTORS DETERMINED                       │
│ FOR EACH INTER PREDICTION MODE                             │
└──────────────────────────────────────────────────────────┘
                        │
                        ▼
┌──────────────────────────────────────────────────────────┐
│ COMPUTE COST FUNCTION VALUE                                │  S276
│ FOR EACH INTER PREDICTION MODE                             │
└──────────────────────────────────────────────────────────┘
                        │
                        ▼
                   ( RETURN )
```

# FIG. 23

MOTION VECTOR INFORMATION-DEPENDENT
INTERPOLATION PROCESS START

S301

No ← INTER
PREDICTION MODE
FROM 16 × 16 PIXELS TO
4 × 4 PIXELS? → Yes

S302
FIRST INTERPOLATION
PROCESS

S303
SECOND INTERPOLATION
PROCESS

RETURN

FIG. 24

EP 2 442 569 A1

( FIRST INTERPOLATION PROCESS START )

S321

< MOTION VECTOR INFORMATION IS OF INTEGER PIXEL PRECISION BOTH HORIZONTALLY AND VERTICALLY? >  No

Yes

S323

< MOTION VECTOR INFORMATION IS OF HALF PIXEL PRECISION EITHER HORIZONTALLY OR VERTICALLY, AND OF INTEGER PIXEL PRECISION IN THE OTHER DIRECTION? >  No

Yes

S325

< MOTION VECTOR INFORMATION IS OF HALF PIXEL PRECISION BOTH HORIZONTALLY AND VERTICALLY? >  No

Yes

S327

< MOTION VECTOR INFORMATION INDICATES POSITION e1? >  No

Yes

S329

< MOTION VECTOR INFORMATION INDICATES POSITION e2? >  No

Yes

GENERATE PREDICTED IMAGE USING PIXEL VALUES OF INTEGER PIXEL PRECISION  S322

INTERPOLATE USING FIRST FILTER  S324

INTERPOLATE USING SECOND FILTER  S326

GENERATE PIXEL VALUE FOR POSITION b USING FIRST FILTER  S328

GENERATE PIXEL VALUES FOR POSITIONS b AND d USING FIRST FILTER  S330

GENERATE PIXEL VALUE FOR POSITION b OR d USING FIRST FILTER  S331

GENERATE PIXEL VALUE FOR POSITION c USING SECOND FILTER  S332

CONDUCT LINEAR INTERPOLATION  S333

( RETURN )

# FIG. 25

SECOND INTERPOLATION
PROCESS START

S351

MOTION VECTOR INFORMATION IS
OF INTEGER PIXEL PRECISION BOTH
HORIZONTALLY AND VERTICALLY?

No

Yes                S352

GENERATE PREDICTED IMAGE
USING PIXEL VALUES OF
INTEGER PIXEL PRECISION

S353

INTERPOLATE USING FIRST FILTER

RETURN

# FIG. 26

EP 2 442 569 A1

## INTERNATIONAL SEARCH REPORT

International application No.

PCT/JP2010/059478

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-515115 A (Tandberg Telecom AS), 07 June 2007 (07.06.2007), claim 1; paragraphs [0028] to [0033] | 1-4,6-8, 11-15,17-19, 22 |
| Y | & US 2005/0123040 A1 & EP 1695560 A & WO 2005/055615 A1 | 5,9,10,16, 20,21 |
| Y | JP 2007-512761 A (Tandberg Telecom AS), 17 May 2007 (17.05.2007), paragraphs [0020] to [0021] & US 2005/0117810 A1 & EP 1690421 A & WO 2005/053312 A1 | 5,16 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 June, 2010 (28.06.10) | 06 July, 2010 (06.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/059478 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2004-147328 A  (Docomo Communications Laboratories U.S.A. Inc.), 20 May 2004 (20.05.2004), entire text; all drawings & US 2004/0076333 A1 | 9,20 |
| Y | JP 2004-007337 A  (Sony Corp.), 08 January 2004 (08.01.2004), abstract & US 2004/0213470 A1 | 10,21 |
| X<br>Y | JP 2007-235456 A  (Toshiba Corp.), 13 September 2007 (13.09.2007), paragraphs [0027] to [0042]; fig. 13 & US 2007/0223585 A1 | 1,6-8,11, 17-19,22<br>5,9,10,16, 20,21 |
| X<br>Y | JP 2008-125078 A  (Samsung Electronics Co., Ltd.), 29 May 2008 (29.05.2008), claims 1 to 5; paragraphs [0018] to [0029] & US 2008/0219572 A1     & KR 10-2008-0041993 A | 1,6-8,11, 17-19,22<br>5,9,10,16, 20,21 |
| A | JP 2006-101403 A  (Toshiba Corp.), 13 April 2006 (13.04.2006), claims 1 to 7 & US 2006/0067406 A1     & EP 1646243 A1 | 1-22 |

Form PCT/ISA/210 (continuation of second sheet) (July 2009)